# EUROPEAN PATENT SPECIFICATION

(11) **EP 3 675 418 B1**
(45) Date of publication and mention of the grant of the patent: **19.07.2023**
(21) Application number: 18848673.2
(22) Date of filing: 24.08.2018
(51) Int. Cl.: H04L 41/0806, H04L 41/0895, H04L 41/084, H04L 61/5014, H04L 67/30

(54) **ISSUANCE OF SERVICE CONFIGURATION FILE**
AUSGABE EINER DIENSTKONFIGURATIONSDATEI
FOURNITURE D'UN FICHIER DE CONFIGURATION DE SERVICE

(30) Priority: 24.08.2017 CN 201710734609
(43) Date of publication of application: 01.07.2020
(73) Proprietor: New H3C Security Technologies Co., Ltd., Hefei, Anhui 230001 (CN)
(72) Inventor: XIA, Tian, Beijing 100085 (CN)
(74) Representative: Zimmermann & Partner Patentanwälte mbB
(86) International application number: PCT/CN2018/102196
(87) International publication number: WO 2019/037775

(56) References cited:
- WO-A1-2016/130700
- CN-A- 103 188 107
- US-A1- 2009 132 682
- US-A1- 2013 046 865
- US-A1- 2017 339 240
- US-B1- 7 627 656
- US-B1- 9 286 047

## Description

### BACKGROUND

In an MDC (Multitenant Device Context) network, a physical device (such as a physical firewall) can be virtualized into a plurality of logical devices (such as logical firewalls) with the virtualization technology. Each of the logical firewalls is a stand-alone firewall having its own dedicated hardware and software resources. Creating, starting, restarting, or deleting a logical firewall will not affect the operations of other logical firewalls. Because a physical firewall can be virtualized into a plurality of logical firewalls, it is possible to effectively save deployment cost, improve networking flexibility, facilitate management and maintenance, and effectively reduce management and maintenance costs.

US20130046865A1 relates to a method of zero configuration for a virtual distributed device in a distributed network. A plurality of peer devices are added as virtual devices to a network device. Configuration information is imported to the network device. A peer group comprising the plurality of peer devices, and corresponding topology of the peer group, are established in the network device. A connection between the network device and one of the plurality of peer devices is established via an uplink switch, the plurality of peer devices being connected to one another by virtual links. The network device distributes the configuration information to the plurality of peer devices in accordance with the established topology via the peer device connected to the uplink switch.

US20090132682A1 relates to a system and method for supplying, to a provider of the device, requirements for information to be stored on a device, obtaining device data for provisioning the device on a network, storing device configuration information on storage associated with the network, receiving a service request from a user of the device, detecting attachment of the device to the network, authenticating the device utilizing a device identifier and shared credentials to enable the device to be configured without storing a network address for configuration in the device, providing network information to the device, and providing configuration information to the device.

US9286047B1 relates to a method for deployment and upgrade of network devices in a network environment includes receiving (for example, at a switch being activated in the network environment), Dynamic Host Configuration Protocol (DHCP) information (for example, from a DHCP server in the network environment). The DHCP information includes a filename and location of a script file. The method further includes downloading the script file from a script server in the network environment and executing the script file. Executing the script file includes copying a configuration file and one or more software images to a memory element of the switch, where the configuration file includes configuration settings relevant to at least a switch identity, and a switch location in the network environment, installing the software images on the switch, rebooting the switch, applying configuration settings from the configuration file to the software images, and saving the configuration file to the memory element.

US7627656B1 relates to a method for providing configuration information to an endpoint, which includes receiving at a file server a configuration information request from the endpoint. The configuration information request requests configuration information for the endpoint. The file server establishes whether the endpoint is authorized to receive the configuration information. If the endpoint is not authorized to receive the configuration information, the endpoint is instructed to register to receive the configuration information. A notification that the endpoint is authorized to receive the configuration information is received. The configuration information is provided to the endpoint when the endpoint is authorized to receive the configuration information.

WO2016130700A1 relates to a service that allows configuration, management and deployment of instances. A configuration document can be stored by the service and one or more instance identifiers can be linked to the configuration document. As a result, multiple instances can be launched and configured using a single configuration document allowing for a consistent result across instances. Local agents running on the instances can execute plug-ins in order to effectuate the configuration. As a result, administrators of instances can configure, manage and easily deploy their unique instance configurations. Customers who manage their instances can scale and manage their entire fleet with repeatable configuration tasks that seamlessly integrate into their instance workflow.

### BRIEF DESCRIPTION OF THE DRAWINGS

FIG. 1A is a flow chart of a method for distributing a service configuration file according to an example of the present disclosure.
FIG. 1B is a flow chart of a method for distributing a service configuration file according to another example of the present disclosure.
FIG. 1C is a flow chart of a method for distributing a service configuration file according to yet another example of the present disclosure.
FIG. 2 is a diagram schematically illustrating a page form according to an example of the present disclosure.
FIG. 3A is a diagram schematically illustrating an application scenario according to an example of the present disclosure.
FIG. 3B is a diagram schematically illustrating another application scenario according to an example of the present disclosure.
FIG. 4 is a block diagram illustrating the structure of an apparatus for distributing a service configuration file according to an example of the present disclosure.
FIG. 5 is a block diagram illustrating the structure of an apparatus for distributing a service configuration file according to an example of the present disclosure.
FIG. 6 is a block diagram illustrating the structure of an apparatus for distributing a service configuration file according to an example of the present disclosure.
FIG. 7 is a block diagram illustrating the hardware structure of a server according to an example of the present disclosure.

### DETAILED DESCRIPTION

In order to make objectives, features, and advantages of the present disclosure more apparent, the present disclosure is described in detail with reference to the accompanying drawings and the detailed description below.

For simplicity and illustrative purposes, the present disclosure is described by referring mainly to example(s) thereof. In the following description, numerous specific details are set forth in order to provide a thorough understanding of the present disclosure.

It will be readily apparent however, that the present disclosure may be practiced without limitation to these specific details. In other instances, some methods and structures have not been described in detail so as not to unnecessarily obscure the present disclosure. As used throughout the present disclosure, the term "includes" means includes but not limited to, the term "including" means including but not limited to. The term "based on" means based at least in part on. In addition, the terms "a" and "an" are intended to denote at least one of a particular element.

In an MDC (Multitenant Device Context) network, a physical device (such as a physical firewall) can be virtualized into a plurality of logical devices (such as logical firewalls) with the virtualization technology. Each of the logical firewalls is a stand-alone firewall having its own dedicated hardware and software resources. Creating, starting, restarting, or deleting a logical firewall will not affect the operations of other logical firewalls. Because a physical firewall can be virtualized into a plurality of logical firewalls, it is possible to effectively save deployment cost, improve networking flexibility, facilitate management and maintenance, and effectively reduce management and maintenance costs.

In the prior art, in virtualizing a physical firewall into a plurality of logical firewalls, an administrator has to manually allocate resources of a CPU (Central Processing Unit), disk, memory and the like for each logical firewall, and manually distribute a service configuration file for each logical firewall. The inventor of the present disclosure found that the existing configuring manner results in a large workload for the administrator and is prone to errors.

An example of the present disclosure provides a method for distributing a service configuration file. The method is applicable to an MDC system. The MDC system may include a physical device and a first server. The physical device may be virtualized into more than one logical device. For example, the physical device is a physical firewall and the logical device is a logical firewall. Each logical firewall is a stand-alone firewall having its own dedicated hardware and software resources. Creating, starting, restarting, or deleting a logical firewall will not affect the operations of other logical firewalls.

In an example of the method for distributing a service configuration file, the first server may determine address information corresponding to a service configuration file for a logical device after receiving a DHCP request message from the logical device. The first server then sends a DHCP response message carrying the address information to the logical device, such that the logical device obtains the service configuration file according to the address information in the DHCP response message. Therefore, the service configuration file is automatically distributed without requiring the administrator to manually distribute a service configuration file for each logical firewall. Accordingly, it is possible to reduce the workload of the administrator and avoid errors about the service configuration file.

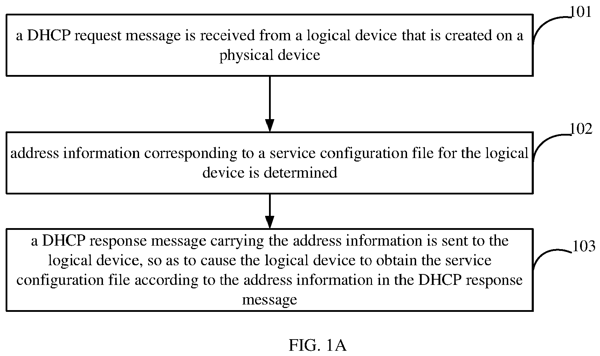

FIG. 1A is a flow chart of a method for distributing a service configuration file. The method is applicable to a first server that may be a DHCP (Dynamic Host Configuration Protocol) server. The method may include following blocks.

At block 101, a DHCP request message is received from a logical device that is created on a physical device.

At block 102, address information corresponding to a service configuration file for the logical device is determined.

At block 103, a DHCP response message carrying the address information is sent to the logical device, so as to cause the logical device to obtain the service configuration file according to the address information in the DHCP response message.

Two procedures may be involved in distributing a service configuration file to a logical device. The first procedure is to generate a service configuration file for the logical device and send the service configuration file to the logical device. The second procedure is to send the address information corresponding to the service configuration file to the logical device, so as to cause the logical device to obtain the service configuration file by means of the address information. Both of the procedures may be performed by the first server. Alternatively, the two procedures may be performed by different servers, with the first procedure being performed by a second server and the second procedure being performed by the first server. The second server may be any server in the MDC network which does not have a DHCP function, and the second server may have a function of generating a service configuration file for a logical device, an authentication function, and so on.

By way of an example, the two procedures are performed by the first server and the second server. The first server may record the IP address of the second server in advance. The second server provides a service configuration file for the logical device. The first server may configure the second server as a server for providing a service configuration file for the logical device. When detecting that a logical device is being created on a physical device, the second server may generate a service configuration file for the logical device, which will be described in more detail later. After being created on the physical device, the logical device does not have any configuration information, and the address information of the second server, and thus cannot obtain the service configuration file from the second server directly. Given this, the logical device may broadcast a DHCP request message. The second server will discard the DHCP request message after receiving the DHCP request message, because it does not have the DHCP function. The first server may process the DHCP request message after receiving the DHCP request message, since it has the DHCP function.

After receiving the DHCP request message, the first server may assign an IP address to the logical device. On this basis, since the first server records the IP address of the second server in advance, after receiving the DHCP request message, the first server may obtain the IP address of the second server and determine the IP address of the second server as the address information corresponding to the service configuration file for the logical device. The first server then sends a DHCP response message carrying the address information to the logical device. In addition to the IP address of the second server, the DHCP response message may carry the IP address assigned to the logical device.

After receiving the DHCP response message, the logical device may parse the DHCP response message to obtain the address information, and then obtain the service configuration file from the second server corresponding to the address information.

As another example, both the procedures above are performed by the first server. The first server may generate a service configuration file for the logical device, and record the URL (Uniform Resource Locator) corresponding to the storage location of the service configuration file. After receiving the DHCP request message, the first server may assign an IP address to the logical device. On this basis, the first server may locally retrieve the URL corresponding to the storage location of the service configuration file, and determine the URL as the address information corresponding to the service configuration file. The first server then sends a DHCP response message carrying the address information to the logical device. In addition to the URL, the DHCP response message may carry the IP address assigned to the logical device.

After receiving the DHCP response message, the logical device may parse the DHCP response message to obtain the address information (i.e., the URL corresponding to the storage location of the service configuration file), and then obtain the service configuration file from the storage location corresponding to the URL.

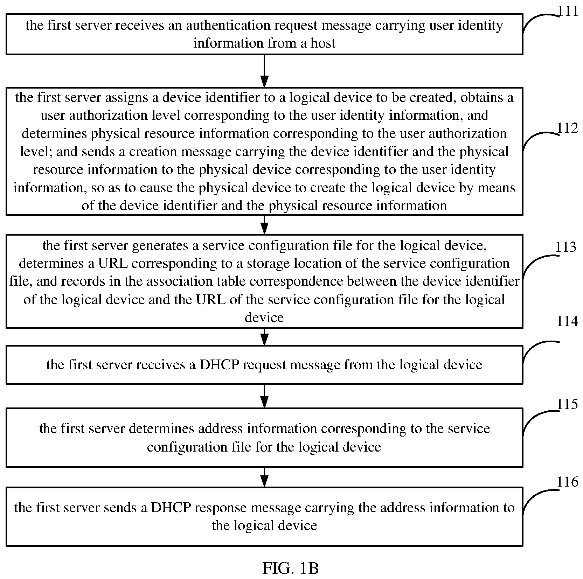

In an example that for example the first server performs both the procedures above, the blocks 101 to 103 will be described in detail, as shown in FIG. 1B.

At block 111, the first server receives an authentication request message from a host.

The authentication request message may carry user identity information of a user, which may include a username and password.

If the user identity information is successfully authenticated, block 112 will be performed. If the user identity information is not successfully authenticated, an authentication failure message will be returned to the host. The example is described under the scenario where the authentication succeeds.

In an example, a user in a local area network may register a username and password on the first server. For example, the username is "AA", and the password is "123456". The first server may set user authorization levels. A user authorization level is related to a service that the user purchased. The way of assigning a user authorization level is not limited herein. The first server may maintain an association table based on the information above. The association table may be to record information such as a username, password, and user authorization level. It may also record a device identifier, service configuration file, address information corresponding to the service configuration file, and so on. Table 1 shows the association table in an initial state.

**Table 1**

| Username | Password | User Authorization level | Device Identifier | Name of Basic Configuration File | URL of Basic Configuration File | Name of Customized Configuration File | URL of Customized Configuration File |
|---|---|---|---|---|---|---|---|
| AA | 123456 | user authorization level 1 | | | | | |
| BB | 123123 | user authorization level 2 | | | | | |
| CC | 456456 | user authorization level 3 | | | | | |
| ... | ... | ... | ... | ... | ... | ... | ... |

When a user wants to create a logical device, the user may send an authentication request message carrying the user identity information to the first server via the host. After receiving the authentication request message from the host, the first server may perform authentication on the user identity information. If the user identity information is successfully authenticated, block 112 will be performed. If the user identity information is not successfully authenticated, an authentication failure message will be returned to the host. The example is described under the scenario where the authentication succeeds.

For example, if the user identity information of a user 1 exists in the association table shown in Table 1, the user identity information will be authenticated successfully. If the user identity information of the user 1 does not exists in the association table shown in Table 1, the user identity information will not be authenticated successfully, and an authentication failure message will be returned to the host 111.

In an example, the user may select a service type of a logical device. The service type may include, but is not limited to, IPS (Intrusion Prevention System), AV (Antivirus Wall), and the like. The service type is not limited herein. The host receives a selection instruction input by the user, which carries the service type. The host may add the service type to the authentication request message, that is, the authentication request message may carry the service type of the logical device. For example, the host may add the identifier of the service type to the authentication request message.

At block 112, the first server assigns a device identifier to a logical device to be created, obtains a user authorization level corresponding to the user identity information, and determines physical resource information corresponding to the user authorization level; and sends a creation message carrying the device identifier and the physical resource information to the physical device corresponding to the user identity information, so as to cause the physical device to create the logical device by means of the device identifier and the physical resource information.

The physical resource information is information of the necessary resources for starting the logical device. For example, the physical resource information may include, but is not limited to, one or any combination of: hardware resources (such as disks), CPU, memory, maximum throughput, the number of sessions, and the like.

In an example, after determining that the user identity information is successfully authenticated, the first server may assign a device identifier to the logical device to be created.

In an example, after determining that the user identity information is successfully authenticated, the first server may also search for a user authorization level corresponding to the user identity information in the association table, and then determine physical resource information corresponding to the user authorization level according to preset correspondence between a user authorization level and physical resource information. The correspondence between a user authorization level and physical resource information may be set by a technician.

The first server may also maintain the correspondence between a user authorization level and physical resource information, such as the correspondence between user authorization level 1 and physical resource information 1, the correspondence between user authorization level 2 and physical resource information 2, and so on. The first server may maintain correspondence between user identity information and physical devices in the association table, which is not shown in Table 1. Based on the correspondence, the first server may determine a physical device corresponding to the user identity information that is carried in the authentication request message. The first server may then send a creation message to the physical device. The creation message carries the device identifier and the physical resource information.

After receiving the creation message, the physical device may parse the creation message to obtain the device identifier and the physical resource information. The physical device then creates a logical device by means of the device identifier and the physical resource information.

At block 113, the first server generates a service configuration file for the logical device, determines a URL corresponding to the storage location of the service configuration file, and records, in the association table, correspondence between the device identifier of the logical device and the URL of the service configuration file for the logical device.

The service configuration file may include, but is not limited to, a basic configuration file and/or a customized configuration file.

The basic configuration file is related to the service type. A same basic configuration file may be used for logical devices of a same service type, and different basic configuration files may be used for logical devices of different service types. The first server may store basic configuration files of various service types, for example, a basic configuration file A corresponding to a service type A, a basic configuration file B corresponding to a service type B, and so on. The way of generating a basic configuration file will be described later.

A customized configuration file may include personalized configurations of a logical device, such as ACL, rate limitation threshold. A customized configuration file is related to user's needs, that is, the customized configuration file can be generated according to the user's needs.

The first server may generate a service configuration file for the logical device, store the service configuration file, and record a URL corresponding to the storage location of the service configuration file. The first server may record in the association table the correspondence between the device identifier of the logical device and the URL, i.e., the URL of the service configuration file for the logical device.

In a case where the service configuration file includes a basic configuration file, the process of generating a service configuration file for the logical device may include, but is not limited to, that: the first server parses the authentication request message to obtain the service type, and generates a basic configuration file corresponding to the service type for the logical device.

In a case where the service configuration file includes a basic configuration file and a customized configuration file, the approach of generating a service configuration file for the logical device may include but is not limited to the following approaches.

Approach I: the first server parses the authentication request message to obtain the service type, and generates a basic configuration file corresponding to the service type; parses a page response message to obtain user configuration information, and generates a customized configuration file according to the user configuration information. Specifically, the first server parses the authentication request message to obtain the service type, and generates a basic configuration file corresponding to the service type for the logical device. The first server sends a page message carrying configuration parameters to the host, so as to cause the host to obtain user configuration information corresponding to the configuration parameters. The first server then receives from the host a page response message carrying the user configuration information, and generates a customized configuration file for the logical device according to the user configuration information.

In an example, the authentication request message may further carry the service type of the logical device to be created. The first server may parse the authentication request message to obtain the service type, and then generate a basic configuration file corresponding to the service type according to the preset correspondence between the service type and the basic configuration file.

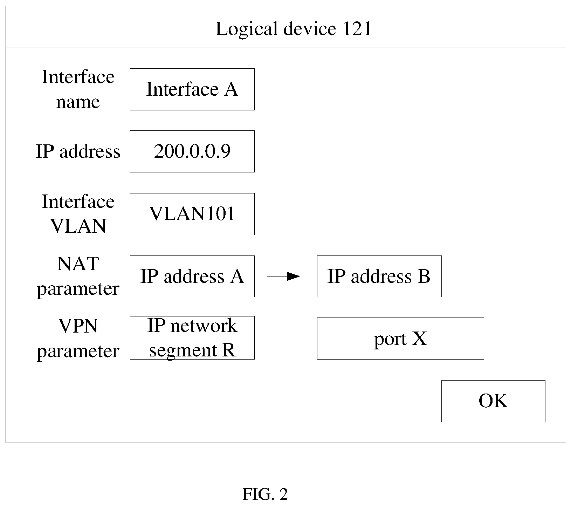

The first server may also send a page message carrying configuration parameters to the host. The page message may include a page form. The page form includes the device identifier of the logical device and the configuration parameters for generating the customized configuration file, such as an interface name, an IP address, a VLAN of the interface, an NAT (Network Address Translation) parameter, a VPN (Virtual Private Network) parameter, and the like. Of course, the configuration parameters are not limited thereto, and other configuration parameters are also possible. FIG. 2 schematically illustrates a page form according to the example of the present disclosure.

After receiving the page message, the host may display the page form to the user. The user can learn, from the device identifier displayed on the page form, which logical device user configuration information is to be inputted into, and input in the page form the user configuration information corresponding to the configuration parameters. For example, the interface name is interface A, the IP address of the interface is 200.0.0.9, the VLAN of the interface is VLAN101, the NAT parameter is the translating of IP address A to IP address B, and the VPN parameter is the listening to the IP network segment R and the listening to a port X. In addition, the user configuration information that the user input in the page form may further include: web addresses prohibited from accessing (for example, www.aaa.com), bandwidth limitation for limiting the rate, IP addresses prohibited from accessing, and the like. Of course, the above user configuration information is for illustration and is not intended to be limiting.

The host obtains the user configuration information and the device identifier contained in the page form, and sends a page response message carrying the user configuration information and the device identifier to the first server. After receiving the page response message, the first server parses the page response message to obtain the user configuration information and the device identifier.

The first server may generate a customized configuration file for the logical device based on the user configuration information. For example, for the user configuration information of "web addresses prohibited from accessing (for example, www.aaa.com)", the customized configuration file A may include a denied ACL (Access Control List), such as "deny 220.0.0.5 (i.e., the IP address of www.aaa.com)". For the user configuration information of "bandwidth limitation for limiting the rate", the customized configuration file A may include a command for rate limitation, for example, CAR (Committed Access Rate) of 5000kbps and the like. For the user configuration information of "IP addresses prohibited from accessing", the customized configuration file A may include an ACL that specifies the IP addresses prohibited from accessing the network. Of course, the above approach is merely an example for generating a customized configuration file A, and is not intended to be limiting.

Approach II: The first server may obtain a service type and user configuration information by sending a page message, and then generate a basic configuration file and a customized configuration file. Specifically, the first server sends a page message carrying configuration parameters to the host, so as to cause the host to obtain a service type and user configuration information corresponding to the configuration parameters; and then receives from the host a page response message carrying the service type and the user configuration information, generates a basic configuration file corresponding to the service type for the logical device, and generates a customized configuration file for the logical device according to the user configuration information.

In an example, when no service type is carried in the authentication request message, the first server may send a page message carrying configuration parameters to the host.

After receiving the page message, the host may display the page form to the user. The user can learn, from the device identifier displayed on the page form, which logical device user configuration information is to be inputted into, and input in the page form the service type of the logical device and the user configuration information corresponding to the configuration parameters. For example, the interface name is interface A, the IP address of the interface is 200.0.0.9, the VLAN of the interface is VLAN101, the NAT parameter is the translating of IP address A to IP address B, the VPN parameter is the listening to the IP network segment R and the listening to a port X, and the service type is IPS type. In addition, the user configuration information that the user inputs in the page form may further include: web addresses prohibited from accessing (for example, www.aaa.com), bandwidth limitation for limiting the rate, IP addresses prohibited from accessing, and the like. Of course, the above user configuration information is for illustration and is not intended to be limiting.

The host obtains the user configuration information, the service type, and the device identifier contained in the page form, and sends a page response message to the first server, where the page response message carries the user configuration information, the service type, and the device identifier. After receiving the page response message, the first server parses the page response message to obtain the user configuration information, the service type, and the device identifier. The first server then generates the basic configuration file corresponding to the service type for the logical device, and generates the customized configuration file for the logical device according to the user configuration information.

In an example, the first server may record the URL of the basic configuration file and the URL of the customized configuration file in an entry with the user identity information in the association table. Further, the first server may also record the name of the basic configuration file and the name of the customized configuration file in the entry with the user identity information in the association table.

The block 112 and block 113 may be executed in a different order from that as shown, which is not limited herein.

At block 114, the first server receives a DHCP request message from the logical device.

In an example, after being created by the physical device using the device identifier and the physical resource information, the logical device does not have any configuration information, and the address information of the first server, and thus cannot obtain the service configuration file from the first server directly. Given this, the logical device may broadcast a DHCP request message. The DHCP request message carries the device identifier of the logical device. For example, the device identifier of the logical device may be carried in a first option field (such as the field of Option 82) of the DHCP request message.

At block 115, the first server determines address information corresponding to the service configuration file for the logical device.

In an example, after receiving the DHCP request message, the first server may process the DHCP request message, that is, the first server assigns an IP address to the logical device, since it has the DHCP function.

On this basis, the first server may further parse the DHCP request message to obtain the device identifier of the logical device, search the association table to obtain the URL of the service configuration file corresponding to the device identifier, and determine the URL as address information corresponding to the service configuration file for the logical device.

At block 116, the first server sends a DHCP response message carrying the address information to the logical device.

The address information is the URL of the service configuration file.

For example, the address information may be carried in a second option field (such as the field of Option 100) of the DHCP response message. In addition to the address information, the DHCP response message may also carry an IP address assigned by the first server to the logical device.

After receiving the DHCP response message, the logical device parses the DHCP response message to obtain the address information corresponding to the service configuration file, and then obtains the service configuration file according to the address information.

Specifically, for the flowchart shown in FIG. 1B, the process that the logical device obtains the service configuration file according to the address information may be that: the logical device may send a download request message carrying the address information to the first server. After receiving the download request message, the first server parses the download request message to obtain the address information, i.e., the URL of the service configuration file, obtains the service configuration file corresponding to the logical device from the storage location corresponding to the URL, and then sends a download response message carrying the service configuration file to the logical device. The logical device may obtain the service configuration file from the download response message and then load the service configuration file to accomplish configuration. In this way, the logical device can automatically load the service configuration file to accomplish configuration, without the manual configuration of the administrator. This can reduce the workload of the administrator and improve the efficiency of configuring logical devices.

The download service function provided by the first server to the logical device may be a download service function using FTP (File Transfer Protocol). Of course, the download service function may also be other types of download service functions, which is not limited.

By way of an example, if the method for distributing service configuration file is performed by the first server together with the second server, users may register on the second server, and the association table shown in Table 1 can be maintained in the second server.

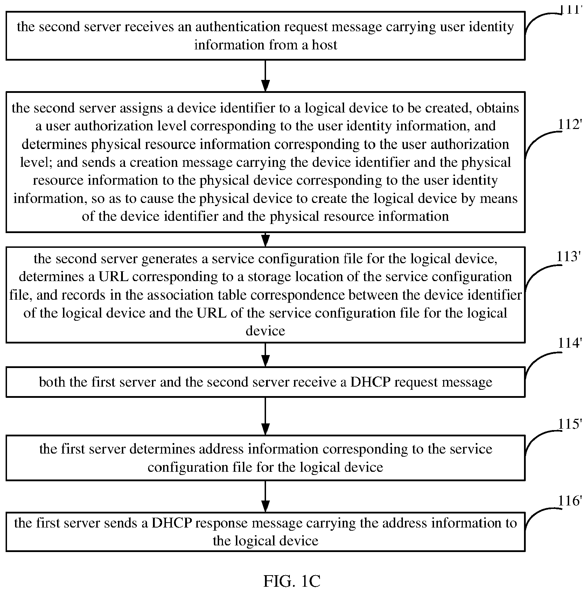

FIG. 1C shows the specific flowchart of the method for distributing a service configuration file, which is performed by the first server together with the second server.

The blocks 111'-113' in FIG. 1C are similar to the blocks 111-113 in FIG. 1B. The difference is that the blocks 111-113 in FIG. 1B are performed by the first server, while the blocks 111'-113' in FIG. 1C are performed by the second server.

At block 114', both the first server and the second server receive a DHCP request message.

The second server will discard the DHCP request message because it does not have the DHCP function. After receiving the DHCP request message, the first server may response to the DHCP request message since it has the DHCP function.

At block 115', the first server determines address information corresponding to the service configuration file for the logical device.

In an example, the first server may record the IP address of the second server in advance, and the first server may configure the second server as a server for providing a service configuration file for a logical device. After receiving the DHCP request message, the first server may assign an IP address to the logical device. On this basis, since the first server records the IP address of the second server in advance, after receiving the DHCP request message, the first server may locally retrieve the IP address of the second server and determine the IP address of the second server as the address information corresponding to the service configuration file.

At block 116', the first server sends a DHCP response message carrying the address information to the logical device.

The address information is the IP address of the second server.

For example, the address information may be carried in a second option field (such as the field of Option 100) of the DHCP response message. Further, in addition to the address information, the DHCP response message may also carry the IP address assigned by the first server to the logical device. For example, the IP address may be carried in the *yiaddr* (indicating Your IP Address) field.

After receiving the DHCP response message, the logical device parses the DHCP response message to obtain the address information corresponding to the service configuration file, and then obtains the service configuration file according to the address information.

Specifically, the process that the logical device obtains the service configuration file according to the address information may be that: the logical device sends a request message, which carries the device identifier, for requesting a URL to the second server according to the IP address of the second server. After receiving the request message, the second server parses the request message to obtain the device identifier. The second server searches the association table, to obtain a URL corresponding to the device identifier. The second server sends a response message carrying the URL to the logical device. The logical device sends a download request message carrying the URL to the second server. After receiving the download request message, the second server parses the download request message to obtain the address information, i.e., the URL of the service configuration file, obtains the service configuration file corresponding to the logical device from the storage location corresponding to the URL, and then sends a download response message carrying the service configuration file to the logical device. The logical device may obtain the service configuration file from the download response message and then load the service configuration file to accomplish configuration. In this way, the logical device can automatically load the service configuration file to accomplish configuration, without the manual configuration of the administrator. This can reduce the workload of the administrator and improve the efficiency of configuring logical devices. The download service function provided by the second server to the logical device may be a download service function using FTP (File Transfer Protocol). Of course, the download service function may also be other types of download service functions, which is not limited.

Based on the technical solution above, examples of the present disclosure can automatically distribute the service configuration file to a logical device (such as, a logical firewall), without the administrator manually distributing the service configuration file to the logical device. Therefore, it is possible to reduce the workload of the administrator and avoid errors about the service configuration file.

In addition, in an example, after receiving the DHCP request message, instead of directly sending the service configuration file to the logical device, the first server sends the URL of the service configuration file or the IP address of the second server to the logical device. The reasons for this may include that: when receiving the DHCP request message, the first server cannot know whether the logical device can operate properly. If the logical device cannot operate properly while the configuration file is sent to the logical device, the logical device cannot correctly process the service configuration file and thereby cannot be configured with the service configuration file. If the logical device can operate properly, it will send a download request message, i.e., the logical device can request the download of the service configuration file through the download request message. At this point, if the service configuration file is sent to the logical device, the logical device can correctly process the service configuration file.

The method for distributing a configuration file is described in detail below in conjunction with specific scenarios.

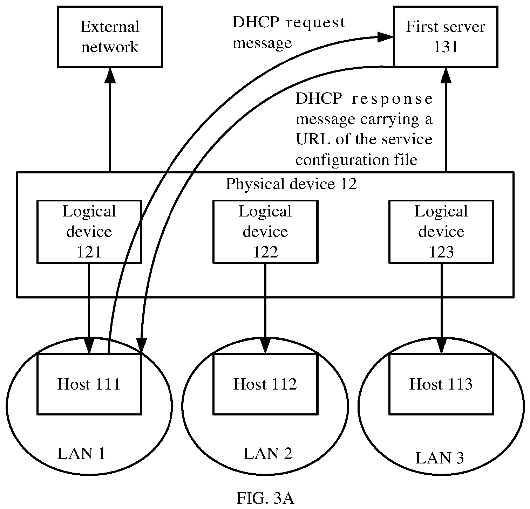

Scenario 1: FIG. 3A is a schematic diagram of networking under a scenario according to an example. A first server is deployed in the networking. The first server is to provide an authentication function, a DHCP function, and a download service function. For illustration purpose, the download service function is described as a download service function using FTP (File Transfer Protocol) by way of an example. Of course, the download service function may also be other types of download service functions, which is not limited. The authentication function may be a function for authenticating a user, such as an authentication function based on a username and password. With the authentication function, the first server can authenticate a user. After the user is successfully authenticated, the physical device will be allowed to create a logical device, and the first server generates a service configuration file for the logical device. With the download service function, the first server can send the service configuration file to the logical device. With the DHCP function, the first server may send the address information corresponding to the service configuration file to the logical device. The logical device obtains the service configuration file by means of the address information.

As shown in FIG. 3A, the local area network 1, the local area network 2, and the local area network 3 connect to the external network via the physical device 12. The physical device 12 includes three logical devices, i.e., the logical device 121, the logical device 122, and the logical device 123. Initially, the physical device 12 has no logical device. With the method provided in the example of the present disclosure, a logical device can be created on the physical device 12, and a service configuration file can be distributed to the logical device.

The user 1 in the local area network 1 may register at the first server 131 for example with a username "AA" and password "123456". The first server 131 may set in advance a user authorization level 1. The user 2 in the local area network 2 may register at the first server 131 for example with a username "BB" and password "123123". The first server 131 may set in advance a user authorization level 2. The user 3 in the local area network 3 may register at the first server 131 for example with a username "CC" and password "456456". The first server 131 may set in advance a user authorization level 3. A user authorization level is related to the service that the user purchased. The way of assigning a user authorization level is not limited herein.

Based on the above information, the association table maintained by the first server 131 can be initially that shown in Table 1.

In the scenario shown in FIG. 3A, the processing of each logical device is the same. Thus, to simplify the description, the following description is based on the creating of a logical device (i.e., the logical device 121 in FIG. 3A) by the user 1 in the local area network. The method for distributing a service configuration file in the present disclosure may include the following operations.

At operation a1, the user 1 sends an authentication request message to the first server 131 via the host 111. The authentication request message may carry the user identity information of the user 1. The user identity information of the user 1 includes the username of "AA" and the password of "123456".

In an example, the user 1 may send the authentication request message to the physical device via the host 111, with the destination address of the authentication request message being the IP address of the first server 131. The physical device transmits the authentication request message to the first server 131 according to the IP address of the first server 131.

At operation a2, after receiving the authentication request message, the first server 131 determines that the user identity information of the user 1 is successfully authenticated if the user identity information exists in Table 1, and operation a3 is performed; otherwise, the first server 131 determines that the user identity information of the user 1 is not successfully authenticated, and returns an authentication failure message to the host 111. The authentication failure process will not be discussed. The following description is set forth based on a successful authentication.

At operation a3, the first server 131 allocates a device identifier (e.g., abed), obtains the user authorization level 1 corresponding to the user identity information of the user 1 by searching the association table shown in Table 1, and determines the physical resource information 1 corresponding to the user authorization level 1.

The first server 131 may maintain the correspondence between a user authorization level and physical resource information, such as the correspondence between user authorization level 1 and physical resource information 1, the correspondence between user authorization level 2 and physical resource information 2, and so on. After obtaining the user authorization level 1, the first server 131 can thus determine that the physical resource information corresponding to the user authorization level 1 is the physical resource information 1.

The physical resource information is information of the necessary resources for starting the logical device. For example, the physical resource information may include, but is not limited to, one or any combination of: hardware resources (such as disks), CPU, memory, maximum throughput, the number of sessions, and the like.

At operation a4, the first server 131 sends a creation message to the physical device 12 corresponding to the user identity information of the user 1, wherein the creation message carries the device identifier abed and the physical resource information 1.

The first server 131 may maintain the correspondence between the user identity information and the physical device. For example, the first server 131 maintains in the association table the correspondence between the user identity information and the physical device. Table 1 does not show this correspondence. The first server 131 may send the creation message to the physical device 12 based on this correspondence.

At operation a5, after receiving the creation message, the physical device 12 creates a logical device (i.e., the logical device 121 shown in FIG. 3A) by means of the device identifier abed and the physical resource information 1.

At operation a6, the first server 131 generates a service configuration file for the logical device 121, and records in Table 1 the correspondence between the device identifier abed and the URL of the service configuration file.

The operation a6 and operations a4, a5 can be executed in a different order from that as described, which is not limited herein.

The service configuration file may include, but is not limited to, a basic configuration file and/or a customized configuration file.

The basic configuration file is related to the service type. A same basic configuration file may be used for logical devices of a same service type, and different basic configuration files may be used for logical devices of different service types. The first server 131 may store basic configuration files of various service types, for example, the basic configuration file A corresponding to the service type A, the basic configuration file B corresponding to the service type B, and the like. Here, the way of generating a basic configuration file will not be described again. The service type may include, but is not limited to, IPS (Intrusion Prevention System), AV (Antivirus Wall), or the like. The service type is not limited herein.

A customized configuration file may include personalized configurations of a logical device, such as ACL, rate limitation threshold. A customized configuration file is related to user's needs. The customized configuration file can be generated according to the user's needs.

There are two cases for the process of "the first server 131 generates a service configuration file for the logical device 121", as follows.

Case I: The first server 131 generates a basic configuration file for the logical device 121. Specifically, the authentication request message sent by the host 111 to the first server 131 may also carry the service type of the logical device 121 to be created, such as the service type A. The first server 131 may parse the authentication request message to obtain the service type A, and may generate for the logical device 121 a basic configuration file A corresponding to the service type A based on the correspondence between the service type A and the basic configuration file A.

Case II: The first server 131 generates a basic configuration file and a customized configuration file for the logical device 121. There are two specific processing approaches.

Approach I: The first server 131 parses the authentication request message to obtain the service type and generates a basic configuration file corresponding to the service type; and parses a page response message to obtain user configuration information and generates a customized configuration file according to the user configuration information. Specifically, the first server 131 generates a basic configuration file A corresponding to the service type A for the logical device 121, the specific process of which refers to Case I. The first server 131 sends a page message carrying configuration parameters to the host 111. The page message may include a page form. The page form includes a device identifier of the logical device and configuration parameters for generating the customized configuration file, such as an interface name, an IP address, a VLAN of the interface, an NAT (Network Address Translation) parameter, a VPN (Virtual Private Network) parameter, and the like. Of course, other configuration parameters are also possible, and the configuration parameters are not limited herein.

After receiving the page message, the host 111 may display the page form to the user. The user can learn, from the device identifier displayed on the page form, which logical device user configuration information is to be inputted into, and input in the page form user configuration information corresponding to the configuration parameters. For example, the interface name is interface A, the IP address of the interface is 200.0.0.9, the VLAN of the interface is VLAN101, the NAT parameter is the translating of IP address A to IP address B, and the VPN parameter is the listening to the IP network segment R and the listening to a port X. In addition, the user configuration information that the user inputs in the page form may further include: web addresses prohibited from accessing (for example, www.aaa.com), bandwidth limitation for limiting the rate, IP addresses prohibited from accessing, and the like. Of course, the above user configuration information is for illustration and is not intended to be limiting.

The host 111 obtains the user configuration information and the device identifier contained in the page form, and sends a page response message to the first server 131. The page response message may carry the user configuration information and the device identifier. After receiving the page response message, the first server 131 parses the page response message to obtain the user configuration information and the device identifier.

The first server 131 may generate a customized configuration file A for the logical device based on the user configuration information. For example, for the user configuration information of "web addresses prohibited from accessing (for example, www.aaa.com)", the customized configuration file A may include a denied ACL, such as "deny 220.0.0.5 (i.e., the IP address of www.aaa.com)". For the user configuration information of "bandwidth limitation for limiting the rate", the customized configuration file A may include a command for rate limitation, for example, CAR (Committed Access Rate) of 5000kbps and the like. For the user configuration information of "IP addresses prohibited from accessing", the customized configuration file A may include an ACL that specifies the IP addresses prohibited from accessing the network. Of course, the above approach is merely an example for generating a customized configuration file A, and is not intended to be limiting.

Approach II: The first server 131 may obtain a service type and user configuration information by sending a page message, and then generate a basic configuration file and a customized configuration file. Specifically, the first server 131 generates a basic configuration file A corresponding to the service type A for the logical device 121, the specific process of which refers to Case I. The difference from that in Case 1 is that the first server 131 obtains the service type from the page response message rather than from the authentication request message. The first server 131 generates a customized configuration file A for the logical device 121, the specific process of which refers to Approach I.

After generating the basic configuration file A for the logical device, the first server 131 may further record in the association table the correspondence between the device identifier abed of the logical device 121 and the URL of the basic configuration file A. After generating the customized configuration file A for the logical device, the first server 131 may further record in the association table the correspondence between the device identifier abed of the logical device 121 and the URL of the customized configuration file A.

Since the authentication request message carries the user identity information, and the page response message carries the device identifier, the URL of the basic configuration file and the URL of the customized configuration file may be recorded in the association table according to the user identity information or the device identifier. Further, the name of the basic configuration file and the name of the customized configuration file may also recorded in the association table. Table 2 is an example of the association table.

In the table, when the basic configuration file A is stored at the storage location A, the URL corresponding to the storage location A is the URL of the basic configuration file A. When the customized configuration file B is stored at the storage location B, the URL corresponding to the storage location B is the URL of the basic configuration file B.

**Table 2**

| Username | Password | User Authori-zation Level | Device Identifier | Name of Basic Configuration File | URL of Basic Configuration File | Name of Customized Configuration File | URL of Custo-mized Configuration File |
|---|---|---|---|---|---|---|---|
| AA | 123456 | user authorization level 1 | abed | basic configuration file A | URLA | Customized configuration file A | URL B |
| BB | 1231213 | user authorization level 2 | | | | | |
| CC | 456456 | user authorization level 3 | | | | | |
| ... | ... | ... | ... | ... | ... | ... | ... |

At operation a7, after the physical device 12 creates the logical device 121, the logical device 121 may broadcast a DHCP request message carrying the device identifier abed. For example, the device identifier abed may be carried in a first option field (such as the field of Option 82) of the DHCP request message.

At operation a8, after receiving the DHCP request message, the first server 131 may assign an IP address 100.100.0.0 to the logical device 121, and searches the association table shown in Table 2 to obtain the URL A and the URL B corresponding to the device identifier abed.

At operation a9, the first server 131 sends a DHCP response message carrying the IP address 100.100.0.0, the URL A and the URL B to the logical device 121. For example, the URL A and URL B may be carried in a second option field (such as the field of Option 100) of the DHCP response message.

At operation a10, after receiving the DHCP response message, the logical device 121 parses the DHCP response message to obtain the URL A and the URL B, and sends an FTP download request carrying the URL A to the first server 131 and sends an FTP download request carrying the URL B to the first server 131.

At operation a11, after receiving the FTP download request carrying the URL A, the first server 131 may obtain the basic configuration file A from the storage location A corresponding to the URL A; and send an FTP response message carrying the basic configuration file A to the logical device 121. After receiving the FTP download request carrying the URL B, the first server 131 may obtain the customized configuration file A from the storage location B corresponding to the URL B; and send an FTP response message carrying the customized configuration file A to the logical device 121.

At operation a12, after receiving the FTP response message carrying the basic configuration file A, the logical device 121 parses the FTP response message to obtain the basic configuration file A. After receiving the FTP response message carrying the customized configuration file A, the logical device 121 parses the FTP response message to obtain the customized configuration file A.

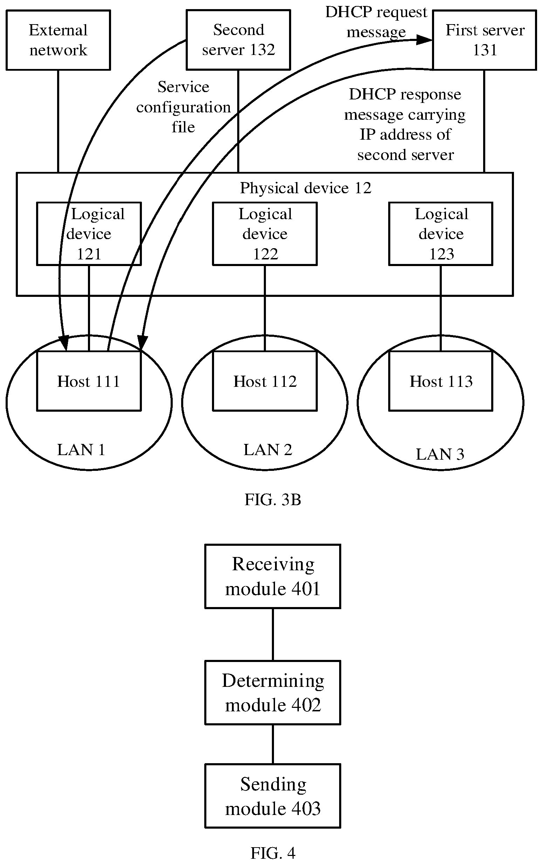

Scenario 2: FIG. 3B is a schematic diagram of networking under another scenario according to an example. A first server and a second server are deployed in the networking. The first server is to provide a DHCP function. The first server may record the IP address of the second server in advance. The first server may configure the second server as a server for providing a service configuration file for the logical device. The second server is to provide an authentication function and a download service function (such as an FTP service function). With the authentication function, the second server can authenticate a user. After the user is successfully authenticated, the physical device will be allowed to create a logical device and generate a service configuration file for the logical device. With the download service function, the second server may send the service configuration file to the logical device. With the DHCP function, the first server may send the address information corresponding to the service configuration file to the logical device. The logical device obtains the service configuration file by means of the address information.

Compared with that shown in 3A, a second server 132 is added in FIG. 3B. Users register at the second server 132. The second server 132 maintains the association table shown in Table 1.

Under the Scenario 2, the method for distributing a service configuration file in an example of the present disclosure may include the following operations b1-b7.

Operations b1-b7 are similar to the operations a1-a7 under Scenario 1. The difference is that the operations a1-a7 under Scenario 1 are performed by the first server 131, while the operations b1-b7 under Scenario 2 are performed by the second server 132. The implementations will not be described again.

At operation b8, after receiving the DHCP request message, the second server 132 discards the DHCP request message since it does not have the DHCP function. Since the first server has the DHCP function, after receiving the DHCP request message, the first server 131 assigns an IP address 100.100.0.0 to the logical device 121 and obtains the IP address of the second server 132.

At operation b9, the first server 131 sends a DHCP response message carrying the IP address 100.100.0.0 and the IP address of the second server 132 to the logical device 121. For example, the IP address of the second server 132 is carried in a second option field (such as the field of Option 100) of the DHCP response message. The IP address 100.100.0.0 is carried in *ayiaddr* field.

At operation b10, after receiving the DHCP response message, the logical device 121 parses the DHCP response message to obtain the IP address of the second server 132; and sends, by using the IP address of the second server 132, a request message for requesting a URL to the second server 132, where the request message carries the device identifier abed.

At operation b11, the second server 132 searches the association table shown in Table 2, to obtain the URL A and the URL B corresponding to the device identifier abed.

At operation b12, the second server 132 sends a response message carrying the URL A and URL B to the logical device 121.

At operation b13, the logical device 121 sends an FTP download request carrying the URL A to the second server 132, and sends an FTP download request carrying the URL B to the second server 132.

At operation b14, after receiving the FTP download request carrying the URL A, the second server 132 may obtain the basic configuration file A from the storage location A corresponding to the URL A, and send an FTP response message carrying the basic configuration file A to the logical device 121. After receiving the FTP download request carrying the URL B, the second server 132 may obtain the customized configuration file A from the storage location B corresponding to the URL B, and send an FTP response message carrying the customized configuration file A to the logical device 121.

At operation b15, after receiving the FTP response message carrying the basic configuration file A, the logical device 121 parses the FTP response message to obtain the basic configuration file A. After receiving the FTP response message carrying the customized configuration file A, the logical device 121 parses the FTP response message to obtain the customized configuration file A.

In another example, in operation b10, the logical device 121 sends an FTP download request carrying the device identifier abed to the second server 132. The second server 132 searches the association table shown in Table 2 by means of the device identifier abcd, to obtain the URL A and URL B; obtains the basic configuration file A from the storage location A corresponding to the URL A, and sends an FTP response message carrying the basic configuration file A to the logical device 121; and obtains the customized configuration file A from the storage location B corresponding to the URL B, and sends an FTP response message carrying the customized configuration file A to the logical device 121. In this way, the logical device 121 may obtain the basic configuration file A and the customized configuration file A.

In an example, under the above scenarios, the basic configuration file and/or customized configuration file for the logical device can be updated. The host may send a configuration file update message to the first server 131 in Scenario 1 or the second server 132 in Scenario 2.

In an example, if the basic configuration file of the logical device is to be updated, the configuration file update message may carry the user identity information and an updated service type. If the customized configuration file of the logical device is to be updated, the configuration file update message may carry the user identity information and updated user configuration information. If the basic configuration file and the customized configuration file of the logical device are to be updated, the configuration file update message may carry the user identity information, the updated service type, and the updated user configuration information.

Based on this, the first server 131/second server 132 may receive a configuration update message from the host. If the configuration file update message carries an updated service type, a new basic configuration file corresponding to the updated service type is generated for the logical device; and/or if the configuration file update message carries updated user configuration information, a new customized configuration file is generated for the logical device according to the updated user configuration information. The correspondence between the device identifier of the logical device and the URL of the new basic configuration file and/or the URL of the new customized configuration file may then be recorded in the association table.

For example, if the user is to update the service type of the logical device 121, e.g. updating the service type A to service type B, the host 111 is triggered to send a configuration file update message to the first server 131/second server 132, where the configuration file update message may carry user identity information and the service type B. This way, the first server 131/second server 132 may generate a basic configuration file B for the logical device 121, and record in the association table the correspondence between the device identifier (e.g., abed) of the logical device 121 and the URL of the basic configuration file B. The first server 131/second server 132 may determine the device identity (e.g., abed) based on the user identity information carried in the configuration update message.

For another example, if the user is to update the customized configuration file A of the logical device 121, the host 111 is triggered to display the page form to the user again, and the user may input the updated user configuration information in the page form. For example, the VLAN 101 of the interface VLAN may be updated to VLAN 102, the NAT parameter in the page form may be deleted, and the other user configuration information in the page form may remain unchanged.

The host 111 is then triggered to send a configuration file update message to the first server 131/second server 132. The configuration file update message may carry the user identity information and the updated user configuration information. The first server 131/second server 132 may generate a new customized configuration file based on the updated user configuration information, and record in the association table the correspondence between the device identifier of the logical device 121 and the new customized configuration file.

Further, in Scenario 1, the operations a7-a12 are performed again, and in Scenario 2, the operations b7-b15 are performed again. The new basic configuration file and/or new customized configuration file can be sent to the logical device 121. The logical device 121 updates its own basic configuration file and/or customized configuration file.

In this technical solution, in order to update the basic configuration file and/or customized configuration file of the logical device, a new basic configuration file and/or customized configuration file may be generated at the first server 131/second server 132, and the basic configuration file and/or customized configuration file of the logical device 121 can then be updated to a new basic configuration file and/or customized configuration file. In this way, it is possible to achieve more automatic and intelligent method and improve the user's service experience. Moreover, after generating a new basic configuration file and/or customized configuration file for the logical device, the first server 131/second server 132 may not delete the existing basic configuration file and/or customized configuration file. That is, the first server 131/second server 132 stores a plurality of basic configuration files and/or customized configuration files of the logical device 121.

The present disclosure is not to be limited in terms of the examples described above. Many modifications and variations can be made as will be apparent to those skilled in the art.

In the present disclosure, for simplicity, method examples are described as a combination of a series of actions. However, those skilled in the art should understand that examples of the present disclosure are not limited by the order of the actions described. In the examples, some actions can be performed in other or concurrent order. Those skilled in the art should also understand that the examples described in the specification are preferred examples, and the actions involved are not necessarily required in an example of the present disclosure.

Referring to FIG. 4, FIG. 4 is a block diagram illustrating the structure of an apparatus for distributing a service configuration file according to an example of the present disclosure.

The apparatus for distributing a service configuration file in an example of the present disclosure may be applied to the first server. Specifically, the apparatus may include a receiving module 401, a determining module 402, and a sending module 403. The description for the modules is set forth below.

The receiving module 401 is to receive a DHCP request message from a logical device that is created on a physical device.

The determining module 402 is to determine address information corresponding to a service configuration file for the logical device.

The sending module 403 is to send a DHCP response message carrying the address information to the logical device, so as to cause the logical device to obtain the service configuration file according to the address information in the DHCP response message.

In an example, the determining module 402 is further to obtain an IP address of a second server that provides a service configuration file for the logical device; and determine the IP address of the second server as the address information corresponding to the service configuration file for the logical device.

In an example, the determining module 402 is further to: parse the DHCP request message to obtain the device identifier of the logical device, search an association table to obtain a URL of the service configuration file corresponding to the device identifier, and determine the URL as the address information corresponding to the service configuration file for the logical device, wherein the association table is to record correspondence between a device identifier of a logical device and a URL of a service configuration file.

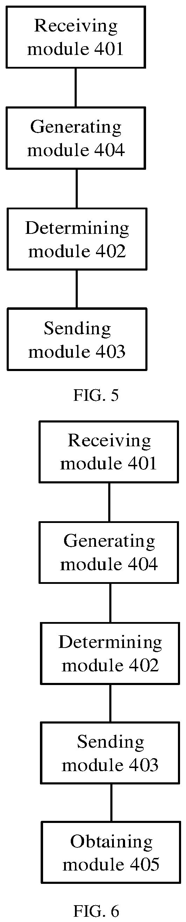

Referring to FIG. 5, FIG. 5 is a block diagram illustrating the structure of an apparatus for distributing a service configuration file according to another example of the present disclosure.

In an example, the apparatus for distributing a service configuration file further includes a generating module 404.

The receiving module 401 is further to receive an authentication request message from a host, wherein the authentication request message carries user identity information.

The determining module 402 is further to: if the user identity information is successfully authenticated, assign a device identifier to a logical device to be created, obtain a user authorization level corresponding to the user identity information, and determine physical resource information corresponding to the user authorization level.

The sending module 403 is further to send a creation message carrying the device identifier and the physical resource information to the physical device corresponding to the user identity information, so as to cause the physical device to create the logical device by means of the device identifier and the physical resource information.

The generating module 404 is to generate a service configuration file for the logical device, determine a URL corresponding to a storage location of the service configuration file, and record in the association table the correspondence between the device identifier and the URL of the service configuration file.

In an example, when the service configuration file includes a basic configuration file, the generating module 404 is to parse the authentication request message to obtain a service type, and generate the basic configuration file corresponding to the service type for the logical device.

The generating module 404 is further to parse the authentication request message to obtain the service type, generate the basic configuration file corresponding to the service type for the logical device, and send a page message carrying configuration parameters to a host, so as to cause the host to obtain user configuration information corresponding to the configuration parameters; receive from the host a page response message carrying the user configuration information, and generate the customized configuration file for the logical device according to the user configuration information. Alternatively, the generating module 404 is further to send a page message carrying configuration parameters to a host, so as to cause the host to obtain the service type and the user configuration information corresponding to the configuration parameters; receive from the host a page response message carrying the service type and the user configuration information; generate the basic configuration file corresponding to the service type for the logical device, and generate the customized configuration file for the logical device according to the user configuration information.

Referring to FIG. 6, FIG. 6 is a block diagram illustrating the structure of another apparatus for distributing a service configuration file according to an example of the present disclosure.

In an example, the apparatus for distributing a service configuration file further includes an obtaining module 405.

The receiving module 401 is further to receive from the logical device a download request message carrying the URL of the service configuration file corresponding to the device identifier.

The obtaining module 405 is to obtain the service configuration file for the logical device from a storage location corresponding to the URL, and send a download response message carrying the service configuration file to the logical device.

In an example, the receiving module 401 is further to receive a configuration update message from the host.

The generating module 404 is further to generate for the logical device a new basic configuration file corresponding to an updated service type, if the configuration file update message carries the updated service type; and/or, generate for the logical device a new customized configuration file according to updated user configuration information, if the configuration file update message carries the updated user configuration information; and
recording in the association table correspondence between the device identifier of the logical device and a URL of the new basic configuration file and/or a URL of the new customized configuration file.

The example of the present disclosure can automatically distribute the service configuration file to a logical device (such as, a logical firewall), without the administrator manually distributing the service configuration file to the logical device. Therefore, it is possible to reduce the workload of the administrator and avoid errors about the configuration file.

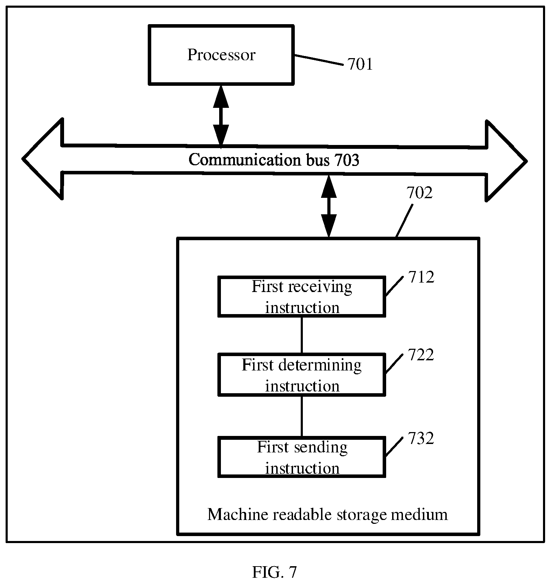

Corresponding to the method example for distributing a service configuration file, an example of the present disclosure further provides a server. The server can server as the first server. Referring to FIG. 7, FIG. 7 illustrates a structure block diagram of a server according to an example of the present disclosure. The server includes a processor 701 and a machine readable storage medium 702. The machine readable storage medium 702 has stored thereon machine executable instructions executed by the processor 701. The machine executable instructions include a first receiving instruction 712, a first determining instruction 722, and a first sending instruction 732.

The first receiving instruction 712 is executed by the processor 701, so as to cause the processor 701 to perform an operation of receiving a DHCP request message from a logical device, the logical device being created on a physical device.

The first determining instruction 722 is executed by the processor 701, so as to cause the processor 701 to perform an operation of determining address information corresponding to a service configuration file for the logical device.

The first sending instruction 732 is executed by the processor 701, so as to cause the processor 701 to perform an operation of sending a DHCP response message carrying the address information to the logical device, so as to cause the logical device to obtain the service configuration file according to the address information in the DHCP response message.

In an example, the first determining instruction 722 is executed by the processor 701, so as to cause the processor to perform operations of:
obtaining an IP address of a second server that provides the service configuration file for the logical device; and
determining the IP address of the second server as the address information corresponding to the service configuration file for the logical device.

In an example, the DHCP request message carries a device identifier of the logical device, and the first determining instruction 722 is executed by the processor 701, so as to cause the processor to perform operations of:
parsing the DHCP request message to obtain the device identifier of the logical device, searching an association table to obtain a URL of the service configuration file corresponding to the device identifier, and determining the URL as the address information corresponding to the service configuration file for the logical device, wherein the association table is to record correspondence between a device identifier of a logical device and a URL of a service configuration file.

In an example, the machine executable instructions further include a second receiving instruction, a second determining instruction, a second sending instruction, and a first generating instruction.

The second receiving instruction is executed by the processor 701, so as to cause the processor 701 to perform an operation of: receiving an authentication request message from a host, wherein the authentication request message carries user identity information.

The second determining instruction is executed by the processor 701, so as to cause the processor 701 to perform operations of: if the user identity information is successfully authenticated, assigning a device identifier to a logical device to be created, obtaining a user authorization level corresponding to the user identity information, and determining physical resource information corresponding to the user authorization level.

The second sending instruction is executed by the processor 701, so as to cause the processor to perform an operation of: sending a creation message carrying the device identifier and the physical resource information to the physical device corresponding to the user identity information, so as to cause the physical device to create the logical device by means of the device identifier and the physical resource information.

The first generating instruction is executed by the processor 701, so as to cause the processor to perform operations of: generating a service configuration file for the logical device, determining a URL corresponding to a storage location of the service configuration file, and recording in the association table the correspondence between the device identifier and the URL of the service configuration file.

In an example, when the service configuration file includes a basic configuration file, the first generating instruction is executed by the processor 701, so as to cause the processor to perform operations of:
parsing the authentication request message to obtain a service type, and generating the basic configuration file corresponding to the service type for the logical device.

When the service configuration file includes a basic configuration file and a customized configuration file, the first generating instruction is executed by the processor 701, so as to cause the processor to perform operations of:
parsing the authentication request message to obtain the service type, generating the basic configuration file corresponding to the service type for the logical device, and sending a page message carrying configuration parameters to a host, so as to cause the host to obtain user configuration information corresponding to the configuration parameters; receiving from the host a page response message carrying the user configuration information, and generating the customized configuration file for the logical device according to the user configuration information;
or, sending a page message carrying configuration parameters to a host, so as to cause the host to obtain the service type and the user configuration information corresponding to the configuration parameters; receiving from the host a page response message carrying the service type and the user configuration information; generating the basic configuration file corresponding to the service type for the logical device, and generating the customized configuration file for the logical device according to the user configuration information.

In an example, the machine executable instructions further include a third receiving instruction and an obtaining instruction.

The third receiving instruction is executed by the processor 701, so as to cause the processor to perform an operation of: receiving from the logical device a download request message carrying the URL of the service configuration file corresponding to the device identifier.

The obtaining instruction is executed by the processor 701, so as to cause the processor to perform operations of: obtaining the service configuration file for the logical device from a storage location corresponding to the URL, and sending a download response message carrying the service configuration file to the logical device.

In an example, the machine executable instructions further include a fourth receiving instruction and a second generating instruction.

The fourth receiving instruction is executed by the processor 701, so as to cause the processor to perform an operation of: receiving a configuration update message from the host.

The second generating instruction is executed by the processor 701, so as to cause the processor to perform operations of: generating for the logical device a new basic configuration file corresponding to an updated service type, if the configuration file update message carries the updated service type; and/or, generating for the logical device a new customized configuration file according to updated user configuration information, if the configuration file update message carries the updated user configuration information; and
recording in the association table correspondence between the device identifier of the logical device and a URL of the new basic configuration file and/or a URL of the new customized configuration file.

As shown in FIG. 7, the server may further include a communication bus 703. The processor 701 and the machine readable storage medium 702 communicate with each other over the communication bus 703. The communication bus may be a Peripheral Component Interconnect (PCI) bus, an Extended Industry Standard Architecture (EISA) bus, or the like. The communication bus 703 can include an address bus, a data bus, a control bus, and the like.

The machine readable storage medium 702 may include a random access memory (RAM), or may include a non-volatile memory (NVM), for example more than one disk memory. Further, the machine readable storage medium 702 may also be more than one storage located remotely from the processor described above.

The processor 701 may be a general-purpose processor, including a central processing unit (CPU), a network processor (NP), and the like. It can also be a digital signal processor (DSP), an application specific integrated circuit (ASIC), a field-programmable gate array (FPGA) or other programmable logic device, a discrete gate or transistor logic device, a discrete hardware component.

Corresponding to the method example for distributing a service configuration file, an example of the present disclosure further provides a machine readable storage medium. The machine readable storage medium may located on a server. The machine readable storage medium has stored thereon machine executable instructions comprising a first receiving instruction, a first determining instruction, and a first sending instruction.

The first receiving instruction is invoked and executed by a processor, so as to cause the processor to perform an operation of receiving a DHCP request message from a logical device, the logical device being created on a physical device.

The first determining instruction is invoked and executed by the processor, so as to cause the processor to perform an operation of determining address information corresponding to a service configuration file for the logical device.

The first sending instruction is invoked and executed by the processor, so as to cause the processor to perform an operation of sending a DHCP response message carrying the address information to the logical device, so as to cause the logical device to obtain the service configuration file according to the address information in the DHCP response message.

In an example, the first determining instruction is executed by the processor, so as to cause the processor to perform operations of:
obtaining an IP address of a second server that provides the service configuration file for the logical device; and
determining the IP address of the second server as the address information corresponding to the service configuration file for the logical device.

In an example, the DHCP request message carries a device identifier of the logical device, and the first determining instruction is executed by the processor, so as to cause the processor to perform operations of:
parsing the DHCP request message to obtain the device identifier of the logical device, searching an association table to obtain a URL of the service configuration file corresponding to the device identifier, and determining the URL as the address information corresponding to the service configuration file for the logical device, wherein the association table is to record correspondence between a device identifier of a logical device and a URL of a service configuration file.

In an example, the machine executable instructions further include a second receiving instruction, a second determining instruction, a second sending instruction, and a first generating instruction.

The second receiving instruction is executed by the processor, so as to cause the processor to perform an operation of receiving an authentication request message from a host, wherein the authentication request message carries user identity information.

The second determining instruction is executed by the processor, so as to cause the processor to perform operations of: if the user identity information is successfully authenticated, assigning a device identifier to a logical device to be created, obtaining a user authorization level corresponding to the user identity information, and determining physical resource information corresponding to the user authorization level.

The second sending instruction is executed by the processor, so as to cause the processor to perform an operation of sending a creation message carrying the device identifier and the physical resource information to the physical device corresponding to the user identity information, so as to cause the physical device to create the logical device by means of the device identifier and the physical resource information.

The first generating instruction is executed by the processor, so as to cause the processor to perform operations of: generating a service configuration file for the logical device, determining a URL corresponding to a storage location of the service configuration file, and recording in the association table the correspondence between the device identifier and the URL of the service configuration file.

In an example, when the service configuration file includes a basic configuration file, the first generating instruction is executed by the processor, so as to cause the processor to perform an operation of:
parsing the authentication request message to obtain a service type, and generating the basic configuration file corresponding to the service type for the logical device.

When the service configuration file includes a basic configuration file and a customized configuration file, the first generating instruction is executed by the processor, so as to cause the processor to perform operations of:
parsing the authentication request message to obtain the service type, generating the basic configuration file corresponding to the service type for the logical device, and sending a page message carrying configuration parameters to a host, so as to cause the host to obtain user configuration information corresponding to the configuration parameters; receiving from the host a page response message carrying the user configuration information, and generating the customized configuration file for the logical device according to the user configuration information;
or, sending a page message carrying configuration parameters to a host, so as to cause the host to obtain the service type and the user configuration information corresponding to the configuration parameters; receiving from the host a page response message carrying the service type and the user configuration information; generating the basic configuration file corresponding to the service type for the logical device, and generating the customized configuration file for the logical device according to the user configuration information.

In an example, the machine executable instructions further include a third receiving instruction and an obtaining instruction.

The third receiving instruction is executed by the processor, so as to cause the processor to perform an operation of receiving from the logical device a download request message carrying the URL of the service configuration file corresponding to the device identifier.

The obtaining instruction is executed by the processor, so as to cause the processor to perform operations of: obtaining the service configuration file for the logical device from a storage location corresponding to the URL, and sending a download response message carrying the service configuration file to the logical device.

In an example, the machine executable instructions further include a fourth receiving instruction and a second generating instruction.

The fourth receiving instruction is executed by the processor, so as to cause the processor to perform an operation of receiving a configuration update message from the host.

The second generating instruction is executed by the processor, so as to cause the processor to perform operations of: generating for the logical device a new basic configuration file corresponding to an updated service type, if the configuration file update message carries the updated service type; and/or, generating for the logical device a new customized configuration file according to updated user configuration information, if the configuration file update message carries the updated user configuration information; and
recording in the association table correspondence between the device identifier of the logical device and a URL of the new basic configuration file and/or a URL of the new customized configuration file.

The example of the present disclosure can automatically distribute the service configuration file to a logical device (such as, a logical firewall), without the administrator manually distributing the service configuration file to the logical device. Therefore, it is possible to reduce the workload of the administrator and avoid errors about the configuration file.

The examples of the apparatuses, servers, machine readable storage media for distributing a service configuration file are described briefly since they are substantially similar to the example of the method for distributing a service configuration file. Related contents can refer to the part that describes the example of the method.

All of the examples in the description are described in a correlated manner, and identical or similar parts in various examples can refer to one another. In addition, the description for each example focuses on the differences from other examples.

Those skilled in the art will appreciate that examples of the present disclosure can be implemented as methods, apparatuses, or computer program products. Thus, the examples of the present disclosure can be implemented by hardware, software, and/or any combination of hardware and software. In addition, examples of the present disclosure may be implemented as one or more computer program products, comprising computer readable program codes, implemented on a computer readable medium (including but is not limited to magnetic disks, CD-ROM, optical disks and the like).

The above detailed description are described with reference to the flow charts and/or the block diagrams of the disclosed methods, terminal devices (systems), and computer program products. It should be understood that each operation and/or block in the flow charts and/or block diagrams, and/or combination thereof could be implemented by computer program instructions. Such computer program instructions could apply to a processor of a general purpose computer, dedicated computer, embedded processing machine or other programmable data processing terminal device to generate a machine, such that the instructions executed by the processor of the computer or other programmable data processing terminal device generate an apparatus for implementing functions represented by one or more operations in a flow chart and/or by one or more blocks in a block diagram.

Such computer program instructions can be stored on a computer readable medium that can direct a computer or other programmable data processing terminal device to operate in a particular manner, such that instructions stored on the computer readable storage medium generates a manufacture including instruction means. The instruction means carries out the functions described as operations and/or blocks in the flow charts/block diagrams.

Such computer program instructions can be loaded on a computer or other programmable data processing terminal device, such that a series of operations are performed on the computer or other programmable terminal device to produce computer implemented processing, and the instructions executed on the computer or other programmable terminal device provide steps carrying out the functions described as operations and/or blocks in the flow charts/block diagrams.

While examples have been disclosed herein, many modifications and variations can be made, as the basic inventive concept will be apparent to those skilled in the art. The examples disclosed herein and modifications and variations are intended to fall within the scope of the appended claims.

It should also be noted that the terms herein such as "first", "second" and the like are only to distinguish one entity or operation from another entity or operation, but do not necessarily require or imply that there is any relationship or order between these entities or operations. Moreover, the terms "include", "comprise" or any other variants thereof are intended to cover non-exclusive inclusions, so that processes, methods, articles or terminal devices comprising a series of elements comprise not only those elements listed but also those not specifically listed or the elements intrinsic to these processes, methods, articles, or terminal devices. Without further limitations, elements defined in the sentences "comprise a ..." or "include a ..." do not exclude that there are other identical elements in the processes, methods, articles, or terminal devices which include these elements.

## Claims

1. A method for distributing a service configuration file, which is applicable to a first server, the method comprising:
receiving (101), by the first server, a DHCP request message from a logical device, the logical device being created on a physical device;
determining (102), by the first server, address information corresponding to a service configuration file for the logical device; and
sending (103), by the first server, a DHCP response message carrying the address information to the logical device, wherein the address information in the DHCP response message is configured for causing the logical device to obtain the service configuration file,
wherein the DHCP request message carries a device identifier of the logical device, and determining address information corresponding to a service configuration file for the logical device comprises:
parsing, by the first server, the DHCP request message to obtain the device identifier of the logical device, searching, by the first server, an association table to obtain a URL of the service configuration file corresponding to the device identifier, and determining, by the first server, the URL as the address information corresponding to the service configuration file for the logical device, wherein the association table is to record correspondence between a device identifier of a logical device and a URL of a service configuration file, and is maintained by the first server.

2. The method of claim 1, wherein before receiving a DHCP request message from the logical device, the method further comprises:
receiving an authentication request message from a host, wherein the authentication request message carries user identity information (111);
if the user identity information is successfully authenticated, assigning a device identifier to a logical device to be created, obtaining a user authorization level corresponding to the user identity information, and determining physical resource information corresponding to the user authorization level (112);
sending a creation message carrying the device identifier and the physical resource information to the physical device corresponding to the user identity information, wherein the device identifier and the physical resource information are configured for causing the physical device to create the logical device; and
generating a service configuration file for the logical device, determining a URL corresponding to a storage location of the service configuration file, and recording in the association table the correspondence between the device identifier and the URL of the service configuration file (113).

3. The method of claim 2, wherein,
when the service configuration file includes a basic configuration file, generating a service configuration file for the logical device comprises:
parsing the authentication request message to obtain a service type, and generating the basic configuration file corresponding to the service type for the logical device; and
when the service configuration file includes a basic configuration file and a customized configuration file, generating a service configuration file for the logical device comprises:
parsing the authentication request message to obtain the service type, generating the basic configuration file corresponding to the service type for the logical device, and sending a page message carrying configuration parameters to a host, wherein the configuration parameters are configured for causing the host to obtain user configuration information corresponding to the configuration parameters; receiving from the host a page response message carrying the user configuration information, and generating the customized configuration file for the logical device according to the user configuration information;
or, sending a page message carrying configuration parameters to a host, wherein the configuration parameters are configured for causing the host to obtain the service type and the user configuration information corresponding to the configuration parameters; receiving from the host a page response message carrying the service type and the user configuration information; generating the basic configuration file corresponding to the service type for the logical device, and generating the customized configuration file for the logical device according to the user configuration information.

4. The method of claim 1, wherein after sending a DHCP response message carrying the address information to the logical device, the method further comprises:
receiving from the logical device a download request message carrying the URL of the service configuration file corresponding to the device identifier; and
obtaining the service configuration file for the logical device from a storage location corresponding to the URL, and sending a download response message carrying the service configuration file to the logical device.

5. The method of claim 3, wherein after generating a service configuration file for the logical device, the method further comprises:
receiving a configuration update message from the host;
generating for the logical device a new basic configuration file corresponding to an updated service type, if the configuration file update message carries the updated service type; and/or, generating for the logical device a new customized configuration file according to updated user configuration information, if the configuration file update message carries the updated user configuration information; and
recording in the association table correspondence between the device identifier of the logical device and a URL of the new basic configuration file and/or a URL of the new customized configuration file.

6. A server, acting as a first server, comprising a processor (701) and a machine readable storage medium (702), the machine readable storage medium having stored thereon machine executable instructions executed by the processor, the machine executable instructions comprising: a first receiving instruction (712), a first determining instruction (722), and a first sending instruction (732), wherein
the first receiving instruction is executed by the processor, so as to cause the processor to perform an operation of receiving, by the first server, a DHCP request message from a logical device, the logical device being created on a physical device;
the first determining instruction is executed by the processor, so as to cause the processor to perform an operation of determining, by the first server, address information corresponding to a service configuration file for the logical device; and
the first sending instruction is executed by the processor, so as to cause the processor to perform an operation of sending, by the first server, a DHCP response message carrying the address information to the logical device, wherein the address information in the DHCP response message is configured for causing the logical device to obtain the service configuration file,
wherein the DHCP request message carries a device identifier of the logical device, and the first determining instruction is executed by the processor, so as to cause the processor to perform operations of:
parsing, by the first server, the DHCP request message to obtain the device identifier of the logical device, searching, by the first server, an association table to obtain a URL of the service configuration file corresponding to the device identifier, and determining, by the first server, the URL as the address information corresponding to the service configuration file for the logical device, wherein the association table is to record correspondence between a device identifier of a logical device and a URL of a service configuration file, and is maintained by the first server.

7. The server of claim 6, wherein the machine executable instructions further comprise: a second receiving instruction, a second determining instruction, a second sending instruction, and a first generating instruction;
the second receiving instruction is executed by the processor, so as to cause the processor to perform an operation of receiving an authentication request message from a host, wherein the authentication request message carries user identity information;
the second determining instruction is executed by the processor, so as to cause the processor to perform operations of: if the user identity information is successfully authenticated, assigning a device identifier to a logical device to be created, obtaining a user authorization level corresponding to the user identity information, and determining physical resource information corresponding to the user authorization level;
the second sending instruction is executed by the processor, so as to cause the processor to perform an operation of sending a creation message carrying the device identifier and the physical resource information to the physical device corresponding to the user identity information, wherein the device identifier and the physical resource information are configured for causing the physical device to create the logical device; and
the first generating instruction is executed by the processor, so as to cause the processor to perform operations of: generating a service configuration file for the logical device, determining a URL corresponding to a storage location of the service configuration file, and recording in the association table the correspondence between the device identifier and the URL of the service configuration file.

8. The server of claim 7, wherein when the service configuration file includes a basic configuration file, the first generating instruction is executed by the processor, so as to cause the processor to perform an operation of:
parsing the authentication request message to obtain a service type, and generating the basic configuration file corresponding to the service type for the logical device; and
when the service configuration file includes a basic configuration file and a customized configuration file, the first generating instruction is executed by the processor, so as to cause the processor to perform operations of:
parsing the authentication request message to obtain the service type, generating the basic configuration file corresponding to the service type for the logical device, and sending a page message carrying configuration parameters to a host, wherein the configuration parameters are configured for causing the host to obtain user configuration information corresponding to the configuration parameters; receiving from the host a page response message carrying the user configuration information, and generating the customized configuration file for the logical device according to the user configuration information;
or, sending a page message carrying configuration parameters to a host, wherein the configuration parameters are configured for causing the host to obtain the service type and the user configuration information corresponding to the configuration parameters; receiving from the host a page response message carrying the service type and the user configuration information; generating the basic configuration file corresponding to the service type for the logical device, and generating the customized configuration file for the logical device according to the user configuration information.

9. The server of claim 6, wherein the machine executable instructions further comprise a third receiving instruction and an obtaining instruction;
the third receiving instruction is executed by the processor, so as to cause the processor to perform an operation of receiving from the logical device a download request message carrying the URL of the service configuration file corresponding to the device identifier; and
the obtaining instruction is executed by the processor, so as to cause the processor to perform operations of: obtaining the service configuration file for the logical device from a storage location corresponding to the URL, and sending a download response message carrying the service configuration file to the logical device.

10. The server of claim 9, wherein the machine executable instructions further comprise a fourth receiving instruction and a second generating instruction;
the fourth receiving instruction is executed by the processor, so as to cause the processor to perform an operation of receiving a configuration update message from the host; and
the second generating instruction is executed by the processor, so as to cause the processor to perform operations of: generating for the logical device a new basic configuration file corresponding to an updated service type, if the configuration file update message carries the updated service type; and/or, generating for the logical device a new customized configuration file according to updated user configuration information, if the configuration file update message carries the updated user configuration information; and
recording in the association table correspondence between the device identifier of the logical device and a URL of the new basic configuration file and/or a URL of the new customized configuration file.

11. A machine readable storage medium (702) having stored thereon machine executable instructions comprising a first receiving instruction (712), a first determining instruction (722), and a first sending instruction (732); wherein
the first receiving instruction is invoked and executed by a processor, so as to cause the processor to perform an operation of receiving, by a first server, a DHCP request message from a logical device, the logical device being created on a physical device;
the first determining instruction is invoked and executed by the processor, so as to cause the processor to perform an operation of determining, by the first server, address information corresponding to a service configuration file for the logical device;
the first sending instruction is invoked and executed by the processor, so as to cause the processor to perform an operation of sending, by the first server, a DHCP response message carrying the address information to the logical device, wherein the address information in the DHCP response message is configured for causing the logical device to obtain the service configuration file;
wherein the DHCP request message carries a device identifier of the logical device, and the first determining instruction is invoked and executed by the processor, so as to cause the processor to perform operations of:
parsing, by the first server, the DHCP request message to obtain the device identifier of the logical device, searching, by the first server, an association table to obtain a URL of the service configuration file corresponding to the device identifier, and determining, by the first server, the URL as the address information corresponding to the service configuration file for the logical device, wherein the association table is to record correspondence between a device identifier of a logical device and a URL of a service configuration file, and is maintained by the first server.

## Patentansprüche

1. Verfahren zum Verteilen einer Dienstkonfigurationsdatei, die auf einen ersten Server anwendbar ist, wobei das Verfahren umfasst:
Empfangen (101) einer DHCP-Anforderungsnachricht von einem logischen Gerät durch den ersten Server, wobei das logische Gerät auf einem physischen Gerät erzeugt wird;
Bestimmen (102), durch den ersten Server, von Adressinformationen, die mit einer Dienstkonfigurationsdatei für das logische Gerät korrespondieren; und
Senden (103) einer DHCP-Antwortnachricht, die die Adressinformationen trägt, durch den ersten Server an das logische Gerät, wobei die Adressinformationen in der DHCP-Antwortnachricht so konfiguriert sind, dass das logische Gerät veranlasst wird, die Dienstkonfigurationsdatei zu erhalten,
wobei die DHCP-Anforderungsnachricht einen Geräteidentifikator des logischen Geräts trägt, und das Bestimmen von Adressinformationen, die mit einer Dienstkonfigurationsdatei für das logische Gerät korrespondieren, umfasst:
Parsen der DHCP-Anforderungsnachricht durch den ersten Server, um den Geräteidentifikator des logischen Geräts zu erhalten, Durchsuchen, durch den ersten Server, einer Zuordnungstabelle, um eine URL der Dienstkonfigurationsdatei zu erhalten, die mit dem Geräteidentifikator korrespondiert, und Bestimmen der URL als die Adressinformation, die mit der Dienstkonfigurationsdatei für das logische Gerät korrespondiert, durch den ersten Server, wobei die Zuordnungstabelle dazu dient, die Korrespondenz zwischen einem Geräteidentifikator eines logischen Geräts und einer URL einer Dienstkonfigurationsdatei aufzuzeichnen, und die von dem ersten Server gewartet wird.

2. Verfahren nach Anspruch 1, wobei das Verfahren vor dem Empfangen einer DHCP-Anforderungsnachricht von dem logischen Gerät ferner umfasst:
Empfangen einer Authentifizierungsanforderungsnachricht von einem Host, wobei die Authentifizierungsanforderungsnachricht Benutzeridentitätsinformationen (111) trägt;
wenn die Benutzeridentitätsinformationen erfolgreich authentifiziert werden, Zuweisen eines Geräteidentifizierers zu einem zu erstellenden logischen Gerät, Erhalten einer Benutzerautorisierungsebene, die mit den Benutzeridentitätsinformationen korrespondiert, und Bestimmen von physischen Ressourceninformationen, die mit der Benutzerautorisierungsebene korrespondieren (112);
Senden einer Erstellungsnachricht, die den Geräteidentifikator und die physischen Ressourceninformationen trägt, welche mit den Benutzeridentitätsinformationen korrespondieren, an das physische Gerät, wobei der Geräteidentifikator und die physischen Ressourceninformationen konfiguriert sind, um das physische Gerät zu veranlassen, das logische Gerät zu erzeugen; und
Erzeugen einer Dienstkonfigurationsdatei für das logische Gerät, Bestimmen einer URL, die mit einem Speicherort der Dienstkonfigurationsdatei korrespondiert, und Aufzeichnen der Korrespondenz zwischen dem Geräteidentifikator und der URL der Dienstkonfigurationsdatei in der Zuordnungstabelle (113).

3. Verfahren nach Anspruch 2, wobei,
wenn die Dienstkonfigurationsdatei eine Basiskonfigurationsdatei aufweist, das Erzeugen einer Dienstkonfigurationsdatei für das logische Gerät umfasst:
Parsen der Authentifizierungsanforderungsnachricht, um einen Diensttyp zu erhalten, und Erzeugen der Basiskonfigurationsdatei entsprechend dem Diensttyp für das logische Gerät; und
wenn die Dienstkonfigurationsdatei eine Basiskonfigurationsdatei und eine angepasste Konfigurationsdatei aufweist, das Erzeugen einer Dienstkonfigurationsdatei für das logische Gerät umfasst:
Parsen der Authentifizierungsanforderungsnachricht, um den Diensttyp zu erhalten, Erzeugen der Basiskonfigurationsdatei, die mit dem Diensttyp für das logische Gerät korrespondiert, und Senden einer Seitennachricht, die Konfigurationsparameter trägt, an einen Host, wobei die Konfigurationsparameter so konfiguriert sind, dass sie den Host veranlassen, Benutzerkonfigurationsinformationen zu erhalten, die mit den Konfigurationsparametern korrespondieren; Empfangen, von dem Host, einer Seitenantwortnachricht, die die Benutzerkonfigurationsinformationen trägt, und Erzeugen der angepassten Konfigurationsdatei für das logische Gerät gemäß den Benutzerkonfigurationsinformationen,
oder Senden einer Seitennachricht mit Konfigurationsparametern an einen Host, wobei die Konfigurationsparameter so konfiguriert sind, dass sie den Host veranlassen, den Diensttyp und die Benutzerkonfigurationsinformationen, die mit den Konfigurationsparametern korrespondieren, zu erhalten; Empfangen, von dem Host, einer Seitenantwortnachricht, die den Diensttyp und die Benutzerkonfigurationsinformationen trägt; Erzeugen der Basiskonfigurationsdatei die mit dem Diensttyp für das logische Gerät korrespondiert, und Erzeugen der angepassten Konfigurationsdatei für das logische Gerät gemäß den Benutzerkonfigurationsinformationen.

4. Verfahren nach Anspruch 1, wobei nach dem Senden an das logische Gerät einer DHCP-Antwortnachricht, die die Adressinformationen trägt, das Verfahren ferner umfasst:
Empfangen einer Download-Anforderungsnachricht von dem logischen Gerät, die die URL der Dienstkonfigurationsdatei, die mit dem Geräteidentifikator korrespondiert, trägt; und
Erhalten der Dienstkonfigurationsdatei für das logische Gerät von einem Speicherort, der mit der URL korrespondiert, und Senden einer Download-Antwortnachricht, die die Dienstkonfigurationsdatei trägt, an das logische Gerät.

5. Verfahren nach Anspruch 3, wobei das Verfahren nach dem Erzeugen einer Dienstkonfigurationsdatei für das logische Gerät ferner umfasst:
Empfangen einer Konfigurationsaktualisierungsnachricht von dem Host;
Erzeugen einer neuen Basiskonfigurationsdatei für das logische Gerät, die mit einem aktualisierten Diensttyp korrespondiert, wenn die Konfigurationsdateiaktualisierungsnachricht den aktualisierten Diensttyp trägt; und/oder Erzeugen einer neuen angepassten Konfigurationsdatei für das logische Gerät gemäß aktualisierter Benutzerkonfigurationsinformationen, wenn die Konfigurationsdateiaktualisierungsnachricht die aktualisierten Benutzerkonfigurationsinformationen trägt; und
Aufzeichnen der Korrespondenz zwischen dem Geräteidentifikator des logischen Geräts und einer URL der neuen Basiskonfigurationsdatei und/oder einer URL der neuen angepassten Konfigurationsdatei in der Zuordnungstabelle.

6. Server, der als ein erster Server fungiert, mit einem Prozessor (701) und einem maschinenlesbaren Speichermedium (702), wobei auf dem maschinenlesbaren Speichermedium maschinenausführbare Befehle gespeichert sind, die von dem Prozessor ausgeführt werden, wobei die maschinenausführbaren Befehle umfassen: einen ersten Empfangsbefehl (712), einen ersten Bestimmungsbefehl (722) und einen ersten Sendebefehl (732), wobei
der erste Empfangsbefehl von dem Prozessor ausgeführt wird, um den Prozessor zu veranlassen, eine Operation des Empfangens einer DHCP-Anforderungsnachricht von einem logischen Gerät durch den ersten Server durchzuführen, wobei das logische Gerät auf einem physischen Gerät erzeugt wird;
der erste Bestimmungsbefehl von dem Prozessor ausgeführt wird, um den Prozessor zu veranlassen, eine Operation des Bestimmens von Adressinformationen, die mit einer Dienstkonfigurationsdatei für das logische Gerät korrespondieren, durch den ersten Server durchzuführen; und
der erste Sendebefehl durch den Prozessor ausgeführt wird, um den Prozessor zu veranlassen, eine Operation des Sendens einer DHCP-Antwortnachricht, die die Adressinformationen trägt, durch den ersten Server an das logische Gerät durchzuführen, wobei die Adressinformationen in der DHCP-Antwortnachricht so konfiguriert sind, dass sie das logische Gerät veranlassen, die Dienstkonfigurationsdatei zu erhalten,
wobei die DHCP-Anforderungsnachricht einen Geräteidentifikator des logischen Geräts trägt und der erste Bestimmungsbefehl von dem Prozessor ausgeführt wird, um den Prozessor zu veranlassen, die folgenden Operationen durchzuführen;
Parsen der DHCP-Anforderungsnachricht durch den ersten Server, um den Geräteidentifikator des logischen Geräts zu erhalten, Durchsuchen, durch den ersten Server, einer Zuordnungstabelle, um eine URL der Dienstkonfigurationsdatei zu erhalten, die mit dem Geräteidentifikator korrespondiert, und Bestimmen der URL als die Adressinformation, die mit der Dienstkonfigurationsdatei für das logische Gerät korrespondiert, durch den ersten Server, wobei die Zuordnungstabelle dazu dient, die Korrespondenz zwischen einem Geräteidentifikator eines logischen Geräts und einer URL einer Dienstkonfigurationsdatei aufzuzeichnen, und die von dem ersten Server gewartet wird.

7. Server nach Anspruch 6, wobei die maschinenausführbaren Befehle ferner umfassen: einen zweiten Empfangsbefehl, einen zweiten Bestimmungsbefehl, einen zweiten Sendebefehl und einen ersten Erzeugungsbefehl;
der zweite Empfangsbefehl von dem Prozessor ausgeführt wird, um den Prozessor zu veranlassen, eine Operation des Empfangens einer Authentifizierungsanforderungsnachricht von einem Host durchzuführen, wobei die Authentifizierungsanforderungsnachricht Benutzeridentitätsinformationen trägt;
der zweite Bestimmungsbefehl von dem Prozessor ausgeführt wird, um den Prozessor zu veranlassen, folgende Operationen durchzuführen: wenn die Benutzeridentitätsinformationen erfolgreich authentifiziert wurden, Zuweisen eines Geräteidentifikators zu einem zu erstellenden logischen Gerät, Erhalten einer Benutzerautorisierungsebene, die mit den Benutzeridentitätsinformationen korrespondiert, und Bestimmen physischer Ressourceninformationen, die mit der Benutzerautorisierungsebene korrespondieren;
der zweite Sendebefehl von dem Prozessor ausgeführt wird, um den Prozessor zu veranlassen, eine Operation des Sendens einer Erstellungsnachricht, die den Geräteidentifikator und die physischen Ressourceninformationen trägt, welche mit den Benutzeridentitätsinformationen korrespondieren, an das physische Gerät, durchzuführen, wobei der Geräteidentifikator und die physischen Ressourceninformationen so konfiguriert sind, dass sie das physische Gerät veranlassen, das logische Gerät zu erstellen; und
der erste Erzeugungsbefehl von dem Prozessor ausgeführt wird, um den Prozessor zu veranlassen, die folgenden Operationen durchzuführen: Erzeugen einer Dienstkonfigurationsdatei für das logische Gerät, Bestimmen einer URL, die mit einem Speicherort der Dienstkonfigurationsdatei korrespondiert, und Aufzeichnen der Korrespondenz zwischen dem Geräteidentifikator und der URL der Dienstkonfigurationsdatei in der Zuordnungstabelle.

8. Server nach Anspruch 7, wobei, wenn die Dienstkonfigurationsdatei eine Basiskonfigurationsdatei aufweist, der erste Erzeugungsbefehl durch den Prozessor ausgeführt wird, um den Prozessor zu veranlassen, eine von folgenden Operation auszuführen:
Parsen der Authentifizierungsanforderungsnachricht, um einen Diensttyp zu erhalten, und Erzeugen der Basiskonfigurationsdatei, die mit dem Diensttyp für das logische Gerät korrespondiert; und
wenn die Dienstkonfigurationsdatei eine Basiskonfigurationsdatei und eine benutzerdefinierte Konfigurationsdatei aufweist, wird der erste Erzeugungsbefehl von dem Prozessor ausgeführt, um den Prozessor zu veranlassen, die folgenden Operationen auszuführen:
Parsen der Authentifizierungsanforderungsnachricht, um den Diensttyp zu erhalten, Erzeugen der Basiskonfigurationsdatei, die mit dem Diensttyp für das logische Gerät korrespondiert, und Senden einer Seitennachricht, die Konfigurationsparameter trägt, an einen Host, wobei die Konfigurationsparameter so konfiguriert sind, dass sie den Host veranlassen, Benutzerkonfigurationsinformationen zu erhalten, die mit den Konfigurationsparametern korrespondieren; Empfangen, von dem Host, einer Seitenantwortnachricht, die die Benutzerkonfigurationsinformationen trägt, und Erzeugen der angepassten Konfigurationsdatei für das logische Gerät gemäß den Benutzerkonfigurationsinformationen,
oder Senden einer Seitennachricht mit Konfigurationsparametern an einen Host, wobei die Konfigurationsparameter so konfiguriert sind, dass sie den Host veranlassen, den Diensttyp und die Benutzerkonfigurationsinformationen, die mit den Konfigurationsparametern korrespondieren, zu erhalten; Empfangen, von dem Host, einer Seitenantwortnachricht, die den Diensttyp und die Benutzerkonfigurationsinformationen trägt; Erzeugen der Basiskonfigurationsdatei die mit dem Diensttyp für das logische Gerät korrespondiert, und Erzeugen der angepassten Konfigurationsdatei für das logische Gerät gemäß den Benutzerkonfigurationsinformationen.

9. Server nach Anspruch 6, wobei die maschinenausführbaren Befehle ferner einen dritten Empfangsbefehl und einen Erhaltungsbefehl umfassen;
der dritte Empfangsbefehl von dem Prozessor ausgeführt wird, um den Prozessor zu veranlassen, eine Operation des Empfangens einer Download-Anforderungsnachricht von dem logischen Gerät durchzuführen, die die URL der Dienstkonfigurationsdatei, die mit dem Geräteidentifikator korrespondiert, trägt; und
der Erhaltungsbefehl von dem Prozessor ausgeführt wird, um den Prozessor zu veranlassen, die folgenden Operationen auszuführen: Erhalten der Dienstkonfigurationsdatei für das logische Gerät von einem Speicherort, der mit der URL korrespondiert, und Senden einer Download-Antwortnachricht, die die Dienstkonfigurationsdatei trägt, an das logische Gerät.

10. Server nach Anspruch 9, wobei die maschinenausführbaren Befehle ferner einen vierten Empfangsbefehl und einen zweiten Erzeugungsbefehl umfassen;
der vierte Empfangsbefehl von dem Prozessor ausgeführt wird, um den Prozessor zu veranlassen, eine Operation des Empfangens einer Konfigurationsaktualisierungsnachricht von dem Host durchzuführen; und
der zweite Erzeugungsbefehl von dem Prozessor ausgeführt wird, um den Prozessor zu veranlassen, folgende Operationen auszuführen: Erzeugen einer neuen Basiskonfigurationsdatei für das logische Gerät, die mit einem aktualisierten Diensttyp korrespondiert, wenn die Konfigurationsdateiaktualisierungsnachricht den aktualisierten Diensttyp trägt; und/oder Erzeugen einer neuen kundenspezifischen Konfigurationsdatei für das logische Gerät gemäß aktualisierten Benutzerkonfigurationsinformationen, wenn die Konfigurationsdateiaktualisierungsnachricht die aktualisierten Benutzerkonfigurationsinformationen trägt; und
Aufzeichnen der Korrespondenz zwischen dem Geräteidentifikator des logischen Geräts und einer URL der neuen Basiskonfigurationsdatei und/oder einer URL der neuen angepassten Konfigurationsdatei in der Zuordnungstabelle.

11. Maschinenlesbares Speichermedium (702), auf dem maschinenausführbare Befehle gespeichert sind, die einen ersten Empfangsbefehl (712), einen ersten Bestimmungsbefehl (722) und eine ersten Sendebefehl (732) umfassen; wobei
der erste Empfangsbefehl von einem Prozessor aufgerufen und ausgeführt wird, um den Prozessor zu veranlassen, eine Operation des Empfangens einer DHCP-Anforderungsnachricht von einem logischen Gerät durch einen ersten Server durchzuführen, wobei das logische Gerät auf einem physischen Gerät erzeugt wird;
der erste Bestimmungsbefehl wird von dem Prozessor aufgerufen und ausgeführt, um den Prozessor zu veranlassen, eine Operation zur Bestimmung von Adressinformationen, die mit einer Dienstkonfigurationsdatei für das logische Gerät korrespondieren, durch den ersten Server durchzuführen;
der erste Sendebefehl durch den Prozessor aufgerufen und ausgeführt wird, um den Prozessor zu veranlassen, eine Operation des Sendens einer DHCP-Antwortnachricht, die die Adressinformationen trägt, durch den ersten Server an das logische Gerät durchzuführen, wobei die Adressinformationen in der DHCP-Antwortnachricht so konfiguriert sind, dass sie das logische Gerät veranlassen, die Dienstkonfigurationsdatei zu erhalten;
wobei die DHCP-Anforderungsnachricht einen Geräteidentifikator des logischen Geräts trägt, und der erste Bestimmungsbefehl von dem Prozessor aufgerufen und ausgeführt wird, um den Prozessor zu veranlassen, die folgenden Operationen durchzuführen:
Parsen der DHCP-Anforderungsnachricht durch den ersten Server, um den Geräteidentifikator des logischen Geräts zu erhalten, Durchsuchen einer Zuordnungstabelle durch den ersten Server, um eine URL der Dienstkonfigurationsdatei zu erhalten, die mit dem Geräteidentifikator korrespondiert, und Bestimmen der URL durch den ersten Server als die Adressinformation, die mit der Dienstkonfigurationsdatei für das logische Gerät korrespondiert, wobei die Zuordnungstabelle dazu dient, die Korrespondenz zwischen einem Geräteidentifikator eines logischen Geräts und einer URL einer Dienstkonfigurationsdatei aufzuzeichnen, und die durch den ersten Server gewartet wird.

## Revendications

1. Procédé permettant de distribuer un fichier de configuration de service, qui est applicable à un premier serveur, le procédé comprenant :
la réception (101), par le premier serveur, d'un message de demande DHCP provenant d'un dispositif logique, le dispositif logique étant créé sur un dispositif physique ;
la détermination (102), par le premier serveur, d'informations d'adresse correspondant à un fichier de configuration de service pour le dispositif logique ; et
l'envoi (103), par le premier serveur, d'un message de réponse DHCP portant les informations d'adresse au dispositif logique, les informations d'adresse dans le message de réponse DHCP étant configurées pour amener le dispositif logique à obtenir le fichier de configuration de service,
dans lequel le message de demande DHCP porte un identificateur de dispositif du dispositif logique, et la détermination d'informations d'adresse correspondant à un fichier de configuration de service pour le dispositif logique comprend :
l'analyse syntaxique, par le premier serveur, du message de demande DHCP pour obtenir l'identificateur de dispositif du dispositif logique, la recherche, par le premier serveur, d'une table d'association pour obtenir une URL du fichier de configuration de service correspondant à l'identificateur de dispositif, et la détermination, par le premier serveur, de l'URL en guise d'informations d'adresse correspondant au fichier de configuration de service pour le dispositif logique, la table d'association servant à enregistrer une correspondance entre un identificateur de dispositif d'un dispositif logique et une URL d'un fichier de configuration de service, et étant tenue à jour par le premier serveur.

2. Procédé selon la revendication 1, avant réception d'un message de demande DHCP provenant du dispositif logique, le procédé comprenant en outre :
la réception d'un message de demande d'authentification d'un hôte, le message de demande d'authentification portant des informations d'identité d'utilisateur (111) ;
si les informations d'identité d'utilisateur sont authentifiées avec succès, l'attribution d'un identificateur de dispositif au dispositif logique à créer, l'obtention d'un niveau d'autorisation d'utilisateur correspondant aux informations d'identité d'utilisateur, et la détermination d'informations de ressources physiques correspondant au niveau d'autorisation d'utilisateur (112) ;
l'envoi d'un message de création portant l'identificateur de dispositif et les informations de ressources physiques au dispositif physique correspondant aux informations d'identité d'utilisateur, l'identificateur de dispositif et les informations de ressources physiques étant configurés pour amener le dispositif physique à créer le dispositif logique ; et
la génération d'un fichier de configuration de service pour le dispositif logique, la détermination d'une URL correspondant à un emplacement de stockage du fichier de configuration de service, et l'enregistrement dans la table d'association de la correspondance entre l'identificateur de dispositif et l'URL du fichier de configuration de service (113).

3. Procédé selon la revendication 2, dans lequel,
lorsque le fichier de configuration de service comporte un fichier de configuration de base, la génération d'un fichier de configuration de service pour le dispositif logique comprend :
l'analyse syntaxique du message de demande d'authentification pour obtenir un type de service, et la génération du fichier de configuration de base correspondant au type de service pour le dispositif logique ; et
lorsque le fichier de configuration de service comporte un fichier de configuration de base et un fichier de configuration personnalisé, la génération d'un fichier de configuration de service pour le dispositif logique comprend :
l'analyse syntaxique du message de demande d'authentification pour obtenir le type de service, la génération du fichier de configuration de base correspondant au type de service pour le dispositif logique, et l'envoi d'un message de page portant des paramètres de configuration à un hôte, les paramètres de configuration étant configurés pour amener l'hôte à obtenir des informations de configuration d'utilisateur correspondant aux paramètres de configuration ; la réception en provenance de l'hôte d'un message de réponse de page portant les informations de configuration d'utilisateur, et la génération du fichier de configuration personnalisé pour le dispositif logique selon les informations de configuration d'utilisateur ;
ou, l'envoi d'un message de page portant des paramètres de configuration à un hôte, les paramètres de configuration étant configurés pour amener l'hôte à obtenir le type de service et les informations de configuration d'utilisateur correspondant aux paramètres de configuration ; la réception en provenance de l'hôte d'un message de réponse de page portant le type de service et les informations de configuration d'utilisateur ; la génération du fichier de configuration de base correspondant au type de service pour le dispositif logique, et la génération du fichier de configuration personnalisé pour le dispositif logique selon les informations de configuration d'utilisateur.

4. Procédé selon la revendication 1, après envoi d'un message de réponse DHCP portant les informations d'adresse au dispositif logique, le procédé comprenant en outre :
la réception en provenance du dispositif logique d'un message de demande de téléchargement portant l'URL du fichier de configuration de service correspondant à l'identificateur de dispositif ; et
l'obtention du fichier de configuration de service pour le dispositif logique en provenance d'un emplacement de stockage correspondant à l'URL, et l'envoi d'un message de réponse de téléchargement portant le fichier de configuration de service au dispositif logique.

5. Procédé selon la revendication 3, après génération d'un fichier de configuration de service pour le dispositif logique, le procédé comprenant en outre :
la réception d'un message de mise à jour de configuration provenant de l'hôte ;
la génération pour le dispositif logique d'un nouveau fichier de configuration de base correspondant à un type de service mis à jour, si le message de mise à jour de fichier de configuration porte le type de service mis à jour ; et/ou, la génération pour le dispositif logique d'un nouveau fichier de configuration personnalisé selon les informations de configuration d'utilisateur mises à jour, si le message de mise à jour de fichier de configuration porte les informations de configuration d'utilisateur mises à jour ; et
l'enregistrement dans la table d'association d'une correspondance entre l'identificateur de dispositif du dispositif logique et une URL du nouveau fichier de configuration de base et/ou une URL du nouveau fichier de configuration personnalisé.

6. Serveur, jouant le rôle de premier serveur, comprenant un processeur (701) et un support de stockage lisible par machine (702), le support de stockage lisible par machine ayant, stockées sur celui-ci, des instructions exécutables par machine exécutées par le processeur, les instructions exécutables par machine comprenant : une première instruction de réception (712), une première instruction de détermination (722), et une première instruction d'envoi (732), dans lequel
la première instruction de réception est exécutée par le processeur, de façon à amener le processeur à mettre en oeuvre une opération de réception, par le premier serveur, d'un message de demande DHCP provenant d'un dispositif logique, le dispositif logique étant créé sur un dispositif physique ;
la première instruction de détermination est exécutée par le processeur, de façon à amener le processeur à mettre en oeuvre une opération de détermination, par le premier serveur, d'informations d'adresse correspondant à un fichier de configuration de service pour le dispositif logique ; et
la première instruction d'envoi est exécutée par le processeur, de façon à amener le processeur à mettre en oeuvre une opération d'envoi, par le premier serveur, d'un message de réponse DHCP portant les informations d'adresse au dispositif logique, les informations d'adresse dans le message de réponse DHCP étant configurées pour amener le dispositif logique à obtenir le fichier de configuration de service,
dans lequel le message de demande DHCP porte un identificateur de dispositif du dispositif logique, et la première instruction de détermination est exécutée par le processeur, de façon à amener le processeur à mettre en oeuvre des opérations consistant en :
l'analyse syntaxique, par le premier serveur, du message de demande DHCP pour obtenir l'identificateur de dispositif du dispositif logique, la recherche, par le premier serveur, d'une table d'association pour obtenir une URL du fichier de configuration de service correspondant à l'identificateur de dispositif, et la détermination, par le premier serveur, de l'URL en guise d'informations d'adresse correspondant au fichier de configuration de service pour le dispositif logique, la table d'association servant à enregistrer une correspondance entre un identificateur de dispositif d'un dispositif logique et une URL d'un fichier de configuration de service, et étant tenue à jour par le premier serveur.

7. Serveur selon la revendication 6, dans lequel les instructions exécutables par machine comprennent en outre : une deuxième instruction de réception, une seconde instruction de détermination, une seconde instruction d'envoi, et une première instruction de génération ;
la deuxième instruction de réception est exécutée par le processeur, de façon à amener le processeur à mettre en oeuvre une opération de réception d'un message de demande d'authentification provenant d'un hôte, le message de demande d'authentification portant des informations d'identité d'utilisateur ;
la seconde instruction de détermination est exécutée par le processeur, de façon à amener le processeur à mettre en oeuvre des opérations consistant en : si les informations d'identité d'utilisateur sont authentifiées avec succès, l'attribution d'un identificateur de dispositif à un dispositif logique à créer, l'obtention d'un niveau d'autorisation d'utilisateur correspondant aux informations d'identité d'utilisateur, et la détermination d'informations de ressources physiques correspondant au niveau d'autorisation d'utilisateur ;
la seconde instruction d'envoi est exécutée par le processeur, de façon à amener le processeur à mettre en oeuvre une opération d'envoi d'un message de création portant l'identificateur de dispositif et les informations de ressources physiques au dispositif physique correspondant aux informations d'identité d'utilisateur, l'identificateur de dispositif et les informations de ressources physiques étant configurés pour amener le dispositif physique à créer le dispositif logique ; et
la première instruction de génération est exécutée par le processeur, de façon à amener le processeur à mettre en oeuvre des opérations consistant en : la génération d'un fichier de configuration de service pour le dispositif logique, la détermination d'une URL correspondant à un emplacement de stockage du fichier de configuration de service, et l'enregistrement dans la table d'association de la correspondance entre l'identificateur de dispositif et l'URL du fichier de configuration de service.

8. Serveur selon la revendication 7, dans lequel lorsque le fichier de configuration de service comporte un fichier de configuration de base, la première instruction de génération est exécutée par le processeur, de façon à amener le processeur à mettre en oeuvre une opération consistant en :
l'analyse syntaxique du message de demande d'authentification pour obtenir un type de service, et la génération du fichier de configuration de base correspondant au type de service pour le dispositif logique ; et
lorsque le fichier de configuration de service comporte un fichier de configuration de base et un fichier de configuration personnalisé, la première instruction de génération est exécutée par le processeur, de façon à amener le processeur à mettre en oeuvre des opérations consistant en :
l'analyse syntaxique du message de demande d'authentification pour obtenir le type de service, la génération du fichier de configuration de base correspondant au type de service pour le dispositif logique, et l'envoi d'un message de page portant des paramètres de configuration à un hôte, les paramètres de configuration étant configurés pour amener l'hôte à obtenir des informations de configuration d'utilisateur correspondant aux paramètres de configuration ; la réception en provenance de l'hôte d'un message de réponse de page portant les informations de configuration d'utilisateur, et la génération du fichier de configuration personnalisé pour le dispositif logique selon les informations de configuration d'utilisateur ;
ou, l'envoi d'un message de page portant des paramètres de configuration à un hôte, les paramètres de configuration étant configurés pour amener l'hôte à obtenir le type de service et les informations de configuration d'utilisateur correspondant aux paramètres de configuration ; la réception en provenance de l'hôte d'un message de réponse de page portant le type de service et les informations de configuration d'utilisateur ; la génération du fichier de configuration de base correspondant au type de service pour le dispositif logique, et la génération du fichier de configuration personnalisé pour le dispositif logique selon les informations de configuration d'utilisateur.

9. Serveur selon la revendication 6, dans lequel les instructions exécutables par machine comprennent en outre une troisième instruction de réception et une instruction d'obtention ;
la troisième instruction de réception est exécutée par le processeur, de façon à amener le processeur à mettre en oeuvre une opération de réception en provenance du dispositif logique d'un message de demande de téléchargement portant l'URL du fichier de configuration de service correspondant à l'identificateur de dispositif ; et
l'instruction d'obtention est exécutée par le processeur, de façon à amener le processeur à mettre en oeuvre des opérations consistant en : l'obtention du fichier de configuration de service pour le dispositif logique à partir d'un emplacement de stockage correspondant à l'URL, et l'envoi d'un message de réponse de téléchargement portant le fichier de configuration de service au dispositif logique.

10. Serveur selon la revendication 9, dans lequel les instructions exécutables par machine comprennent en outre une quatrième instruction de réception et une seconde instruction de génération ;
la quatrième instruction de réception est exécutée par le processeur, de façon à amener le processeur à mettre en oeuvre une opération de réception d'un message de mise à jour de configuration provenant de l'hôte ; et
la seconde instruction de génération est exécutée par le processeur, de façon à amener le processeur à mettre en oeuvre des opérations consistant en : la génération pour le dispositif logique d'un nouveau fichier de configuration de base correspondant à un type de service mis à jour, si le message de mise à jour de fichier de configuration porte le type de service mis à jour ; et/ou, la génération pour le dispositif logique d'un nouveau fichier de configuration personnalisé selon les informations de configuration d'utilisateur mises à jour, si le message de mise à jour de fichier de configuration porte les informations de configuration d'utilisateur mises à jour ; et
l'enregistrement dans la table d'association d'une correspondance entre l'identificateur de dispositif du dispositif logique et une URL du nouveau fichier de configuration de base et/ou une URL du nouveau fichier de configuration personnalisé.

11. Support de stockage lisible par machine (702) sur lequel sont stockées des instructions exécutables par machine comprenant une première instruction de réception (712), une première instruction de détermination (722), et une première instruction d'envoi (732) ; dans lequel
la première instruction de réception est invoquée et exécutée par un processeur, de façon à amener le processeur à mettre en oeuvre une opération de réception, par un premier serveur, d'un message de demande DHCP provenant d'un dispositif logique, le dispositif logique étant créé sur un dispositif physique ;
la première instruction de détermination est invoquée et exécutée par le processeur, de façon à amener le processeur à mettre en oeuvre une opération de détermination, par le premier serveur, d'informations d'adresse correspondant à un fichier de configuration de service pour le dispositif logique ;
la première instruction d'envoi est invoquée et exécutée par le processeur, de façon à amener le processeur à mettre en oeuvre une opération d'envoi, par le premier serveur, d'un message de réponse DHCP portant les informations d'adresse au dispositif logique, les informations d'adresse dans le message de réponse DHCP étant configurées pour amener le dispositif logique à obtenir le fichier de configuration de service ;
dans lequel le message de demande DHCP porte un identificateur de dispositif du dispositif logique, et la première instruction de détermination est invoquée et exécutée par le processeur, de façon à amener le processeur à mettre en oeuvre des opérations consistant en :
l'analyse syntaxique, par le premier serveur, du message de demande DHCP pour obtenir l'identificateur de dispositif du dispositif logique, la recherche, par le premier serveur, d'une table d'association pour obtenir une URL du fichier de configuration de service correspondant à l'identificateur de dispositif, et la détermination, par le premier serveur, de l'URL en guise d'informations d'adresse correspondant au fichier de configuration de service pour le dispositif logique, la table d'association servant à enregistrer une correspondance entre un identificateur de dispositif d'un dispositif logique et une URL d'un fichier de configuration de service, et étant tenue à jour par le premier serveur.
